# EUROPEAN PATENT APPLICATION

(11) **EP 4 711 758 A1**
(43) Date of publication of application: **18.03.2026**
(21) Application number: 25202184.5
(22) Date of filing: 15.09.2025
(51) Int. Cl.: G01N 30/38, G01N 30/88, G01N 30/02

(54) **GAS CHROMATOGRAPH DEVICE, SYSTEM, AND METHOD WITH MODULAR ARCHITECTURE**

(30) Priority: 17.09.2024 US 202418887878
(71) Applicant: ABB SCHWEIZ AG, 5400 Baden (CH)
(72) Inventor: LAKEY, Steve, Bartlesville, 74003 (US); MAY, Michael J., Bartlesville, 74006 (US); MCCAFFERTY, Garrett, Broken Arrow, 74014 (US); ROBERTSON, Brian J., Tulsa, 74134 (US); SMITH, Brian C., Tulsa, 74104 (US); MARET, Yannick, 5405 Dättwil (CH)
(74) Representative: Maiwald GmbH

(57) **Abstract**

A device includes a first circuitry configured to provide, to a second circuitry of a manifold plate, a control signal for an inlet valve of the manifold plate; receive, from a third circuitry of an analytical module, an attribute of a fluid sample; and determine, based on the measured attribute of the fluid sample, a physical component of the fluid sample. The manifold plate includes the second circuitry and the inlet valve and an inlet channel, the second circuitry configured to control the inlet valve, based on the control signal, to direct the fluid sample from the inlet valve through the inlet channel to the analytical module. The analytical module is affixed to the manifold plate and includes a gas chromatograph oven and the third circuitry, the third circuitry configured to measure, using the one or more sensors, the attribute of the fluid sample in the gas chromatograph oven.

## Description

### FIELD

The present disclosure relates to a gas chromatograph device, system, and method. In particular, the present disclosure relates to an explosion proof gas chromatograph device with a re-tooling that enables multiple independent analysis.

### BACKGROUND

A gas chromatograph is an analytical instrument used in chemistry for separating and analyzing compounds that can be vaporized. The process involves injecting a gaseous or liquid (e.g., fluid) sample into a mobile phase, typically an inert or nonreactive gas such as helium, argon, nitrogen, or hydrogen. This gas stream is passed through a stationary phase, which can be a solid or a liquid contained inside a separation column. The components of the sample move at different velocities through the column, depending on their chemical and structural properties (e.g., physical properties) and their interactions with the stationary phase. As each fluid component exits the column, it is detected and identified electronically. Many gas chromatograph columns are located inside an oven where the temperature of the gas can be controlled and the effluent coming off the column can be monitored by a suitable detector. However, gas chromatographs typically include fixed plumbing and software that limit their adaptability to different application needs. The discrete plumbing used in traditional process gas chromatographs may have an intrinsically large footprint resulting in complex and costly setups that still do not fully meet the needs of the application. Moreover, maintenance and modifications can be difficult due to the many electrical connections, and multiple maintenance access points can complicate the gas chromatographs installation and require extra plant space. As a result, to service or change analytical modules, customers or service providers may need to disconnect and reconnect many electrical cables, leading to wasted time and potential misconnection. For instance, gas chromatographs may have multiple access points for maintenance (front and back), making mounting for easy servicing more difficult (e.g., needing to be away from a wall or sideways and taking more space in the plant).

Additionally, existing compact gas chromatographs may lack the ability to perform multiple independent analyses within a single compact enclosure. When such functionality is needed, users may need to combine separate gas chromatographs, leading to increased complexity, size, and cost, and surrendering certain advantages afforded by a more compact enclosure. Existing gas chromatograph systems may also perform two analyses on the same sample gas stream, but they are not independent: they share the same timing for sample, injection, and measure. This may be impractical when the analyses require different elution times, as the application with a faster elution time can only run at the slower speed of the one requiring a longer elution time. Furthermore, the gas chromatographs may have a single analytical oven and a fixed bead temperature, limiting its ability to optimally run analyses with different temperature requirements.

### SUMMARY

A first aspect of the present application provides a device comprising a first circuitry comprising a memory and one or more processors configured to: provide, to a second circuitry of a manifold plate, a control signal for an inlet valve of the manifold plate; receive, from a third circuitry of a first analytical module, an attribute of a first fluid sample; and determine, based on the measured attribute of the first fluid sample, a physical component of the first fluid sample. The device also comprises the manifold plate comprising the second circuitry and an inlet, the inlet comprising the inlet valve and an inlet channel, the second circuitry comprising a second memory and one or more second processors configured to: receive, from the first circuitry, the control signal; and control the inlet valve of the inlet, based on the control signal, to direct the first fluid sample from the inlet valve through the inlet channel to the first analytical module. The device also comprises the first analytical module affixed to the manifold plate and comprising a first gas chromatograph oven and the third circuitry, the third circuitry comprising a third memory and one or more third processors configured to communicate with one or more sensors, the third circuitry configured to: measure, using the one or more sensors, the attribute of the first fluid sample in the first gas chromatograph; and provide, to the first circuitry, the attribute of the first fluid sample.

According to an implementation of the first aspect, the first circuitry is further configured to: provide, to the third circuitry of the first analytical module, a first configuration for the first analytical module. The third circuitry is further configured to: receive, from the first circuitry, the first configuration; and adjust a first operating parameter of the first gas chromatograph oven based on the first configuration.

According to an implementation of the first aspect, the first circuitry is further configured to: obtain, from the third circuitry, an identification of a structural configuration of the first analytical module; and provide, to the third circuitry, the first configuration based on the obtained first identification.

According to an implementation of the first aspect, the first operating parameter comprises a set point for the temperature or pressure of the first gas chromatograph oven, and providing, to the third circuitry of the first analytical module, the first configuration further comprises providing the set point to the third circuitry.

According to an implementation of the first aspect, the device further comprises a second analytical module comprising: a second gas chromatograph oven comprising a same channel interface as a channel interface of the first gas chromatograph oven and a different channel configuration from a channel configuration of the first gas chromatograph oven; and a second instance of the third circuitry comprising one or more second sensors, the second instance of the third circuitry configured to: receive, from the first circuitry, a second configuration; adjust a second operating parameter of the second gas chromatograph oven based on the second configuration; measure, using the one or more second sensors independently from and in parallel to measuring the attribute of the first fluid sample in the first gas chromatograph, an attribute of a second fluid sample in the second gas chromatograph; and provide, to the first circuitry, the attribute of the second fluid sample. The first circuitry is further configured to: provide, to the second instance of the third circuitry, the second configuration based on the determined physical component of the first fluid sample; receive, from the second instance of the third circuitry, the attribute of the second fluid sample; and determine, based on the attribute of the second fluid sample, a physical component of the second fluid sample.

According to an implementation of the first aspect, the first circuitry is further configured to: provide, to the third circuitry of the first analytical module, a first configuration for the first analytical module; obtain, from the second instance of the third circuitry, a second identification of a structural configuration of the second analytical module; and provide, to the second instance of the third circuitry, the second configuration further based on the first configuration and the obtained second identification.

According to an implementation of the first aspect, the first circuitry further comprises a first printed circuit board (PCB), the second circuitry comprises a second PCB, the third circuitry comprises a third PCB, and the first PCB, the second PCB, and the third PCB are each separate PCBs.

According to an implementation of the first aspect, the device further comprises an explosion proof housing surrounding the first circuitry, the manifold plate, and the first analytical module.

According to an implementation of the first aspect, the explosion proof housing comprises a first portion housing the first circuitry, a second portion housing the manifold plate and the first analytical module, and a third portion providing a seal between the first portion the second portion. The third portion surrounds a portion of an electronic communication infrastructure between the first circuitry and the second circuitry and the third circuitry.

According to an implementation of the first aspect, the manifold plate further comprises a channel interface comprising a portion of a first inlet channel and a portion of a first vent channel. The first gas chromatograph oven is removably affixed to the channel interface of the manifold plate via a fastener.

According to an implementation of the first aspect, the device further comprises a second manifold plate and a second analytical module, the second manifold plate comprising a second instance of the second circuitry and a second inlet, the second inlet comprising a second inlet valve and a second inlet channel, the second circuitry comprising a fourth memory and one or more fourth processors configured to: receive, from the first circuitry, a second control signal; and control the second inlet valve of the inlet, based on the second control signal, to direct a second fluid sample from the second inlet valve through the second inlet channel to the second analytical module. The second analytical module is affixed to the second manifold plate and comprises a second gas chromatograph oven and a second instance of the third circuitry, the second instance of the third circuitry comprises a fifth memory and one or more fifth processors configured to communicate with one or more second sensors, and the fifth circuitry is configured to: measure, using the one or more second sensors, the attribute of the second fluid sample in the second gas chromatograph; and provide, to the first circuitry, the attribute of the second fluid sample.

Any of the implementations of the first aspect above can be combined with and/or implemented according to any of the other implementations of the first aspect above.

A second aspect of the present application provides a system for performing gas chromatography, comprising: a first circuitry comprising a memory and one or more processors configured to: provide, to a second circuitry of a manifold plate, a control signal for an inlet valve of the manifold plate; receive, from a third circuitry of a first analytical module, an attribute of a first fluid sample; and determine, based on the measured attribute of the first fluid sample, a physical component of the first fluid sample. The system also comprises the manifold plate comprising the second circuitry and an inlet, the inlet comprising the inlet valve and an inlet channel, the second circuitry comprising a second memory and one or more second processors configured to: receive, from the first circuitry, the control signal; and control the inlet valve of the inlet, based on the control signal, to direct the first fluid sample from the inlet valve through the inlet channel to the first analytical module. The system also comprises the first analytical module affixed to the manifold plate and comprising a first gas chromatograph oven and the third circuitry, the third circuitry comprising a third memory and one or more third processors configured to communicate with one or more sensors, the third circuitry configured to: measure, using the one or more sensors, the attribute of the first fluid sample in the first gas chromatograph; and provide, to the first circuitry, the attribute of the first fluid sample.

According to an implementation of the second aspect, the first circuitry is further configured to: provide, to the third circuitry of the first analytical module, a first configuration for the first analytical module, and the third circuitry is further configured to: receive, from the first circuitry, the first configuration; and adjust a first operating parameter of the first gas chromatograph oven based on the first configuration.

According to an implementation of the second aspect, the first circuitry is further configured to: obtain, from the third circuitry, an identification of a structural configuration of the first analytical module; and provide, to the third circuitry, the first configuration based on the obtained first identification.

According to an implementation of the second aspect, the first operating parameter comprises a set point for the temperature or pressure of the first gas chromatograph oven, and providing, to the third circuitry of the first analytical module, the first configuration further comprises providing the set point to the third circuitry.

According to an implementation of the second aspect, the system further comprises a second analytical module comprising: a second gas chromatograph oven comprising a same channel interface as a channel interface of the first gas chromatograph oven and a different channel configuration from a channel configuration of the first gas chromatograph oven; and a second instance of the third circuitry comprising one or more second sensors, the second instance of the third circuitry configured to: receive, from the first circuitry, a second configuration; adjust a second operating parameter of the second gas chromatograph oven based on the second configuration; measure, using the one or more second sensors independently from and in parallel to measuring the attribute of the first fluid sample in the first gas chromatograph, an attribute of a second fluid sample in the second gas chromatograph; and provide, to the first circuitry, the attribute of the second fluid sample. The first circuitry is further configured to: provide, to the second instance of the third circuitry, the second configuration based on the determined physical component of the first fluid sample; receive, from the second instance of the third circuitry, the attribute of the second fluid sample; and determine, based on the attribute of the second fluid sample, a physical component of the second fluid sample.

According to an implementation of the second aspect, the first circuitry is further configured to: provide, to the third circuitry of the first analytical module, a first configuration for the first analytical module; obtain, from the second instance of the third circuitry, a second identification of a structural configuration of the second analytical module; and provide, to the second instance of the third circuitry, the second configuration further based on the first configuration and the obtained second identification.

According to an implementation of the second aspect, the system further comprises a housing surrounding a portion of an electronic communication infrastructure between the first circuitry and the second circuitry, the housing configured to provide a fluid seal between the first circuitry and the second circuitry or the third circuitry.

According to an implementation of the second aspect, the system further comprises a second manifold plate and a second analytical module, the second manifold plate comprising a second instance of the second circuitry and a second inlet, the second inlet comprising a second inlet valve and a second inlet channel, the second circuitry comprising a fourth memory and one or more fourth processors configured to: receive, from the first circuitry, a second control signal; and control the second inlet valve of the inlet, based on the second control signal, to direct a second fluid sample from the second inlet valve through the second inlet channel to the second analytical module. The system also further comprises the second analytical module affixed to the second manifold plate and comprising a second gas chromatograph oven and a second instance of the third circuitry, the second instance of the third circuitry comprising a fifth memory and one or more fifth processors configured to communicate with one or more second sensors, the fifth circuitry configured to: measure, using the one or more second sensors, the attribute of the second fluid sample in the second gas chromatograph; and provide, to the first circuitry, the attribute of the second fluid sample.

Any of the implementations of the second aspect above can be combined with and/or implemented according to any of the other implementations of the second aspect above.

A third aspect of the present application provides a method for operating a chromatograph device, comprising: providing, by a first circuity and to a manifold plate comprising a second circuity and an inlet comprising an inlet valve and an inlet channel, a control signal for the inlet valve; adjusting the inlet valve, by the second circuitry and based on the control signal, to direct a first fluid sample from the inlet valve through the inlet channel to the first analytical module; measuring, by an analytical module comprising a first gas chromatograph, a third circuitry, and one or more sensors and using the one or more sensors, an attribute of the first fluid sample in the first gas chromatograph; receiving, by the first circuitry and from the third circuitry, the measured attribute of the first fluid sample; and determining, by the first circuitry and based on the received measured attribute of the first fluid sample, a physical component of the first fluid sample.

Any of the implementations of the first and/or second aspect above can be implement the method according to the third aspect above.

### BRIEF DESCRIPTION OF THE DRAWINGS

Subject matter of the present disclosure will be described in even greater detail below based on the exemplary figures. All features described and/or illustrated herein can be used alone or combined in different combinations. The features and advantages of various embodiments will become apparent by reading the following detailed description with reference to the attached drawings, which illustrate the following:
FIG. 1 illustrates an example schematic environment of an example gas chromatograph according to one or more embodiments of the present disclosure;
FIG. 2 illustrates an example schematic representation of the operation within a gas chromatograph according to one or more embodiments of the present disclosure;
FIG. 3 illustrates an example schematic computing environment of a chromatograph according to one or more embodiments of the present disclosure;
FIG. 4 illustrates an example hardware architecture for the environment of a chromatograph device according to one or more embodiments of the present disclosure;
FIG. 5 illustrates an example explosion-proof chromatograph device including a single gas chromatograph module according to one or more embodiments of the present disclosure;
FIG. 6A illustrates an exploded view of the chromatograph device of FIG. 5;
FIG. 6B illustrates a cross sectional view of the chromatograph device of FIG. 5;
FIG. 7 illustrates an example schematic representation of a software and hardware architecture for a chromatograph device according to one or more embodiments of the present disclosure;
FIG. 8 illustrates an example chromatograph device including multiple gas chromatograph modules on multiple manifolds according to one or more embodiments of the present disclosure;
FIG. 9A illustrates a cross sectional view of an example chromatograph device including multiple base manifolds and multiple analytical modules on each base manifold according to one or more embodiments of the present disclosure;
FIG. 9B illustrates a cross sectional view of an example chromatograph device including multiple base manifolds and multiple analytical modules on one base manifold and a single analytical module on another base manifold according to one or more embodiments of the present disclosure;
FIG. 9C illustrates a cross sectional view of an example chromatograph device including a base manifolds and multiple analytical modules on that base manifold according to one or more embodiments of the present disclosure;
FIG 10 illustrates a schematic representation of a software and hardware architecture for an example chromatograph device according to one or more embodiments of the present disclosure;
FIG. 11 illustrates an exemplary hardware architecture of an electrical compartment of an example chromatograph device according to one or more embodiments of the present disclosure;
FIG. 12A illustrates a schematic representation of circuitry for the hardware architecture of FIG. 11;
FIG. 12B illustrates a schematic representation of a circuit board for the circuitry of FIG. 12A;
FIG. 13 illustrates an explosion-proof electrical feedthrough according to one or more embodiments of the present disclosure;
FIG. 14 illustrates an example analytical compartment according to one or more embodiments of the present disclosure;
FIG. 15A illustrates an exploded view of an example gas feedthrough according to one or more embodiments of the present disclosure;
FIG. 15B illustrates an example gas feedthrough for a base manifold with a single analytical module according to one or more embodiments of the present disclosure;
FIG. 15C illustrates an example gas feedthrough for a base manifold with multiple analytical modules according to one or more embodiments of the present disclosure;
FIG. 16 illustrates an example base manifold according to one or more embodiments of the present disclosure;
FIG. 17 illustrates an exploded view of an example base manifold according to one or more embodiments of the present disclosure;
FIG. 18 illustrates an example base manifold for use with two analytical modules according to one or more embodiments of the present disclosure;
FIG. 19 illustrates an example manifold post interface for a chromatograph module of an analytical module according to one or more embodiments of the present disclosure;
FIG. 20A illustrates a schematic example channel configuration of a base manifold for use with a single analytical module according to one or more embodiments of the present disclosure;
FIG. 20B illustrates an example sample inlet configuration of the channel configuration of FIG. 20A;
FIG. 21A illustrates a schematic example channel configuration of a base manifold for use with multiple analytical modules according to one or more embodiments of the present disclosure;
FIG. 21B illustrates a schematic example channel inlet configuration of a base manifold for use with multiple analytical modules according to the channel configuration of FIG. 21A;
FIG. 21C illustrates an example sample inlet configuration of the channel configuration of FIGS. 21A and 21B;
FIG. 22 illustrates an example analytical module affixed to an example base manifold according to one or more embodiments of the present disclosure;
FIG. 23 illustrates an example chromatograph module connection according to one or more embodiments of the present disclosure;
FIG. 24 illustrates a cross sectional view of an example analytical module according to one or more embodiments of the present disclosure;
FIG. 25 illustrates an exemplary circuit board for a module control node according to one or more embodiments of the present disclosure;
FIG. 26A illustrates an example reverse column step sensor plate configuration according to one or more embodiments of the present disclosure;
FIG. 26B illustrates an example back flush to measure sensor plate configuration according to one or more embodiments of the present disclosure;
FIG. 26C illustrates an example heart cut sensor plate configuration according to one or more embodiments of the present disclosure;
FIG. 27 illustrates a schematic representation of a module control board for an analytical module according to one or more embodiments of the present disclosure;
FIG. 28 illustrates a schematic representation of a feedthrough control board for a base manifold according to one or more embodiments of the present disclosure;
FIG. 29A illustrates a schematic representation of a step for a method of gas chromatography using a chromatograph device according to one or more embodiments of the present disclosure;
FIG. 29B illustrates a schematic representation of a second step for the method of gas chromatography using a chromatograph device according to one or more embodiments of the present disclosure; and
FIG. 29C illustrates a schematic representation of a third step for the method of gas chromatography using a chromatograph device according to one or more embodiments of the present disclosure.

### DETAILED DESCRIPTION

Examples of the presented application will now be described more fully hereinafter with reference to the accompanying FIGs., in which some, but not all, examples of the application are shown. Indeed, the application may be exemplified in different forms and should not be construed as limited to the examples set forth herein; rather, these examples are provided so that the application will satisfy applicable legal requirements. Where possible, any terms expressed in the singular form herein are meant to also include the plural form and vice versa, unless explicitly stated otherwise. Also, as used herein, the term "a" and/or "an" shall mean "one or more" even though the phrase "one or more" is also used herein. Furthermore, when it is said herein that something is "based on" something else, it may be based on one or more other things as well. In other words, unless expressly indicated otherwise, as used herein "based on" means "based at least in part on" or "based at least partially on."

Devices, systems, methods, and computer program products are herein disclosed that provide for a gas chromatograph with a re-tooling that enables multiple independent analysis. For example, a chromatograph device according to one or more embodiments of the present disclosure can receive fluid (e.g., gas, liquid), including a sample fluid to be analyzed, through a gas feedthrough and run the fluid through the channels of a base manifold and the channels of an analytical module. The base manifold can direct the flow a series of channels in the base manifold including inlets, vents, and valves for directing flow through the channels. The base manifold can control the temperature and pressure of the fluid moving through the base manifold to assist in the chromatographic analysis. An analytical module can receive the fluid from the base manifold and perform chromatographic analysis on the fluid. For example, the analytical module can heat the fluid flowing through columnar channels (e.g., columns) of a chromatograph oven to elute the components of the fluid (e.g., produce different gases travelling at different speeds through the columns). The fluid (e.g., the eluted components) passes through columns and past a detector (e.g., a thermal conductivity detector (TCD), flame ionization detector (FID), flame photometric detector (FPD), dielectric barrier discharge ionization (DBID)) which measures a structural and/or chemical feature of the fluid (e.g., a physical feature of the fluid). The analytical module can expel the fluid out from one or more vents and provide these measurements to a central computing unit, and the central computing unit can determine one or more structural and/or chemical features of the fluid.

For instance, one or more embodiments of the present disclosure provide analytical modules mounted on base manifolds. Each gas feedthrough and manifold can support two carrier inputs, ensuring complete independence of each module. Another feature is the ability to change the personality of the module by straightforward design changes (updating the plate, sample loop, or column) or by software, offering unprecedented adaptability and versatility. The module can be electrically connected to the rest of the analyzer via a single sealed PCBA feedthrough connector. Access to the modules can be provided through a front-facing opening, which can effectively reduce the used plant space by half. Additionally, and/or alternatively, one or more embodiments of the present disclosure can integrate several key features. For example, one or more embodiments can optimize the size of the parts to accommodate multiple applications within a confined space which allows for synergistic advantages. For example, while providing a more compact enclosure is itself an advantage, one or more embodiments are also able to provide an explosion proof enclosure due to the more compact construction, as it can limit the force of any internal combustion scaled to the size of the housing. Therefore, by making the housing compact enough, additional advantages are provided such as explosion proof housings. One or more embodiments can include a plurality (e.g., four) of analytical modules mounted on base manifolds, each supporting a plurality (e.g., two) modules. Each module can have its own oven and flow regulations while each manifold sports its own sample and carrier inputs, which can allow each module to function entirely independently. Accordingly, one or more embodiments can provide increased efficiency for both the customer and provider. One or more embodiments can streamline processes, dropping the need for multiple enclosures for applications requiring multiple independent analysis, reducing installation time, and improving cost-effectiveness.

One or more embodiments of the present disclosure are suitable for potentially explosive environments. For instance, given the high energy involved in various applications, intrinsic safety (e.g., an ex-ia protection) can present challenges for a gas chromatograph. Instead, flameproof protection (e.g., an ex-d protection), where the enclosure can withstand an internal explosion without damage, can be more frequently applied. Additionally, flameproof enclosures may require a compact enclosure, limiting the available space for the gas chromatograph. However, one or more embodiments of the present disclosure can provide a modular nature gas chromatograph, providing enhanced modularity of a compact gas chromatograph, improved maintainability, and reduced or maintained spatial footprint, all while ensuring suitability for potentially explosive environments.

Additionally, and/or alternatively, one or embodiments of the present disclosure can provide gas chromatographs that operate in explosive environments and are explosion-proof. For instance, one or more embodiments provide an intrinsic safety standard (e.g., an ex-ia) for gas chromatographs involving lower energy applications, and protection standards (e.g., an ex-d) where the enclosure is designed to withstand an internal explosion without sustaining any damage. For example, in ex ia protection, the electrical circuit is designed to limit the electrical power and temperature rise under fault conditions to values below the limits that would ignite a spark and/or cause an explosion. Ex ia protection is typically used in low power devices (e.g., <100mW). When using ex ia, the enclosure can be provided to protect the electronics from being damaged.

An ex d enclosure is designed to withstand an internal explosion. The enclosure (e.g., housing) should contain a potential explosion and prevent the flame from escaping the housing by preventing the simultaneous presence of an explosive atmosphere and a potential source of ignition in the same volume (e.g., by including an ignition protection gap). For example, in one or more embodiments, an electrical feedthrough separates the circuitry of the electrical compartment from the atmosphere of the analytical compartment, providing an encapsulation and/or potting that allows for the use of a PCB interconnect between the two compartments (e.g., the electrical compartment and the analytical compartment) that is also flame-proof. For instance, ex d enclosures include various standards (e.g., IEC/EN 60079 ff). Additionally, and/or alternatively, the ex d enclosure can allow for an explosion to occur, but contain the explosion and prohibit the propagation of the flame and/or explosion. For example, one or more embodiments of the present application can include flame exits paths in the housing arranged at a contact surface of two portions of the housing (e.g., the path of the threads of a threaded connection between the gas feedthrough and the analytical compartment housing) that allow how gas jets to enter the flame path, expand through the flame path, and exit the housing with a lower temperature unable to ignite gases external to the device. The effect of this potential explosion is captured by the so-called "reference pressure" or explosion pressure, which depends on the ambient temperature and other considerations (e.g. size, shape, standard, of the contained volume). In one or more embodiments of the present application, the certified ambient temperature can be -30 to +60°C. For the housing, the reference pressures can be approximately 175psi for the electrical cavity and approximately 110psi for the analytical cavity, with an overpressure test at 4x those values.

One or more embodiments of the present embodiment integrate several features, including one or more analytical modules mounted on one or more base manifolds, with each base manifold supporting a plurality of modules. Moreover, each gas feedthrough and manifold can support one or more carrier inputs, allows true and complete independence of each module on the manifold. One or more embodiments of the present disclosure can thereby allowing for flexibility in the sample volume and column capacity.

For instance, one or more analytical modules can hold the application dependent plumbing (e.g., heart cut, back-flush to measure, reverse column step), whose personality can be easily changed by design of its plate. In addition, the hardware (e.g., detectors, temperature and pressure control, valve actuation times) can be programmed with personalities fitting the new application needs. The analytical modules can use a PCBA-based interconnect to the rest of the instrument, which allows for straightforward customization of the electrical interconnection if software-based changes are not enough.

Additionally, and/or alternatively, the analytical modules can be electrically connected to the rest of the analyzer via a single connector made of PCBA feedthrough, which allows for an easy exchange of the module. In addition, access to the modules can be provided through a front-facing opening. As a result, the actual plant space demanded by the one or embodiments can be less (e.g., half) of typical systems.

Additionally, and/or alternatively, the analytical module can be exchanged by removing a single screw. This can allow for easily changing the analytical technique in the field by swapping one or more analytical modules or servicing a damaged module.

As previously mentioned, one or more embodiments of the present disclosure provide an explosion-proof gas chromatograph capable of performing multiple independent analyses. The system's (e.g., gas chromatograph's) architecture, housed within an ex-d (e.g., explosion-proof) enclosure, can integrates analytical and electronic compartments. The analytical compartment can hold modules, each equipped with an oven, detectors, columns, pressure control, and a local processing unit. These modules can be compact and flexible using a bonded plate (e.g., diffusion bonded) and programmable timings, pressure points, oven, and bead temperature. The base manifold can allow one or more modules to share the same gas feed-through, enhancing the system's adaptability. The design can support various configurations and allows for the integration of several modules in the same ex-d housing, enabling complex applications. The one or more embodiments can also perform independent analyses with one or more programmable modules and various gases, allowing for simultaneous, distinct analyses. All modules can be controlled by the same processing unit and contained in the electronic compartment, simplifying the user interface and enabling complex process analyses. This combination of features can allow for a compact, adaptable, and versatile system that can run one or more flow applications within a single ex-d enclosure, reducing the need for separate gas chromatographs.

One or more embodiments of the present disclosure provide a synergistic combination of these features. Each feature can enhances the others, resulting in a system that is more than the sum of its parts. This unique combination allows for unprecedented efficiency, versatility, and user-friendliness in compact gas chromatographs. Therefore, not only do the features individually provide advantages, but how they work together provide further synergistic advantages. Additionally, and/or alternatively, the features can be interdisciplinary, combining principles from mechanical and hardware design, manufacturing, system architecture, and software capabilities.

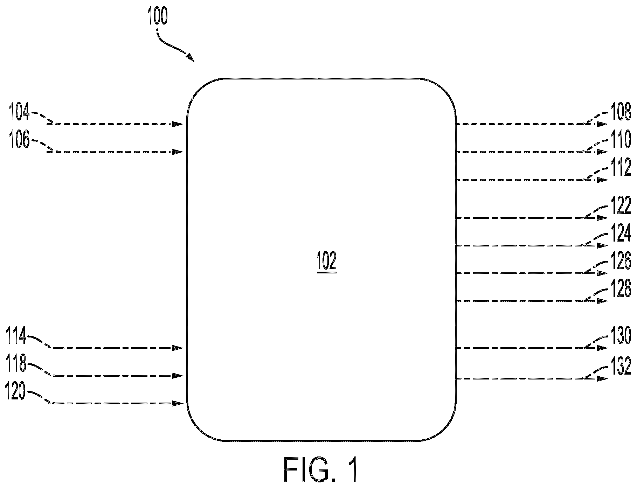

FIG. 1 illustrates a schematic environment 100 of an example explosion-proof gas chromatograph 102. For example, the chromatograph 102 can receive one or more (e.g., multiple) different physical (e.g., fluid) inputs and electrical inputs, and output one or more different signals, communications, and fluids. For instance, chromatograph 102 can receive a carrier 104 (e.g., an inert carrier gas such as Helium, Nitrogen, Hydrogen, and Argon) for carrying the sample 106 (e.g., the sample gas to be analyzed by the chromatograph 102). The chromatograph can then perform one or more chromatography process on the sample 106 and/or carrier 104, and expel the sample 106 and carrier 104 through one or more of the purge vent 108, sample vent 110, and/or extended pilot vents 112. For example, the sample 106 can be prepared (e.g. dissolved and/or diluted) with or without a solvent and then provided to an inlet (e.g., via a gas feedthrough and inlet port, explained in further detail below) of a column. Additionally, and/or alternatively, the sample 106 can be prepared using additional preparation techniques, such as thermal desorption or headspace gas chromatography. The column can run the sample 106 and/or carrier 104 through an oven during the stationary phase resulting in a separation of the gasses in sample 106 and/or carrier 104. One or more sensors (e.g., a TCD) can measure various features of the sample 106 (e.g., thermal conductivity of the gas mixture) in the oven or shortly after exiting the oven. For example, as the gas mixture has been separated in components by the column, the conductivity is a trace with peaks on top or below a baseline. The measured data can be provided to a chromatograph system (e.g., topworks, explained in further detail below). The analysis of the trace (done in topworks) can provide further information such as retention time of a given component by analyzing the location of the peak or the concentration of the given component by analyzing the height and/or area of the corresponding peak. Typically, the concentration is the sought after parameter, but the retention time can be an important factor to link the peak with a particular component. The sample 106 and/or carrier 104 can then be expelled from the chromatograph 102 through the appropriate purge vent 108, sample vent 110, and/or extended pilot vent 112, depending on the speed, volume, and/or characteristics of the sample 106 and/or carrier 104 simultaneously and/or after providing the measured data to the topworks. For example, in some embodiments, the sample 106 can be direct to the sample vent 110 and the purge vent can be utilized as needed to keep column and gas feed through clean by ejecting a small portion of the gas at a lower flow speed for the gas.

The chromatograph 102 can also receive and provide one or more different signals. For example, the chromatograph can receive any combination of digital inputs 114, analog inputs 118, and power inputs 120, and process and utilize any combination of these signals using one or more systems and/or modules of the chromatograph 102. The chromatograph can then output signals to one or more further systems, using any combination of one or more wireless Ethernet signals 122, controller area network (CAN) bus signals 124, wireless fidelity (WIFI) signals 126, and/or universal asynchronous receiver/transmitter (UART) signals 128. Additionally, and/or alternatively, chromatograph 102 can communicate to a system in direct communication with the chromatograph 102 by outputting one or more digital output 103 and/or analog output 132. For instance, the chromatograph 102 can determine the contents of sample 106, and provide this determination to a control system located in the local facility using a digital output 130 and/or to a cloud service using a WIFI signal 126.

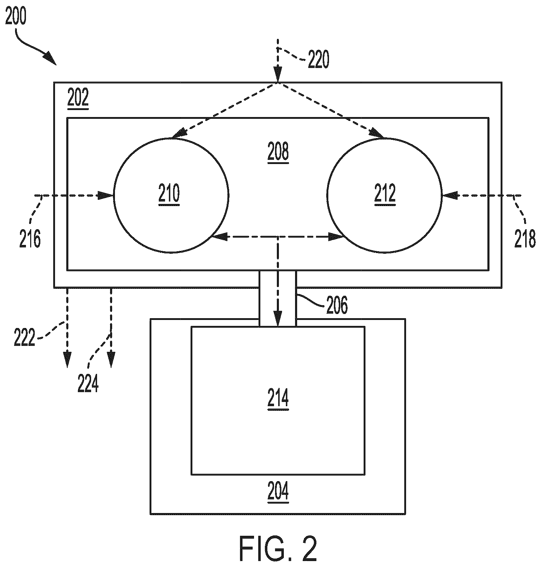

FIG. 2 illustrates a schematic representation 200 of the operation within a gas chromatograph according to one or more embodiments of the present disclosure (e.g., chromatograph 102). For instance, the chromatograph 200 can include an analytical compartment 202, and electrical compartment 204, and an electrical feed through 206 to assist communication between the analytical compartment 202 and the electrical compartment 204. The analytical compartment 202 can include a base manifold 208 connected to one or more separate analytical modules, a first analytical module 210 and a second analytical module 212. The base manifold 208 can receive the first sample 216, the second sample 218, and the carrier gas 220. The base manifold 208 can provide channels and valves that allow for the first sample 216 to be provided to the first analytical module 216 separately from the second module 212, and for the second sample 218 to be provided to the second analytical module 212 separately from the first analytical module 212. The base manifold 208 can receive the carrier gas 220 (which can be a different carrier gas for each analytical module given separate carrier gas channels of the manifold 208) and provide the carrier gas 220 to each of the first analytical module 210 and the second analytical module 212, for example through separate carrier gas channels for each analytical module. The sample gas 216 from the first analytical module 210 and the sample gas 218 from the second analytical module can be provided to either or both of the purge vents 222 or the sample vents 224.

The electrical compartment 204 can include a central computing unit 214 that can receive data from the analytical compartment and perform one or more determinations based on the received data. For example, the measurements (e.g., analysis) performed by the first analytical module 210 and/or the second analytical module 212 can be provided to the central computing 214 via the electronic feed through 206, and the central computing 214 can determine the parameters (e.g., content or concentration) of the sample 216 and/or sample 218. Additionally, and/or alternatively, the central computing unit 214 can receive data from the first analytical module 214 and/or the second analytical module 212 regarding their respective configuration (e.g., heart-cut, dual back-flush, reverse column channel configurations) and provide instructions for operation to the first analytical module 210 and/or second analytical module 212 via electronic feed through. For example, central computing unit 214 may provide an adjustment to the oven temperature, bead temperature, measurement intervals, and configuration of the sample or other valves based on the hardware configuration of the first analytical module 210 and the contents of the sample 216 received. For instance, in one or more embodiments of the present application, the analytical module (e.g., analytical module 210 and/or 212) can provide an attribute (e.g., raw data) of the sample 216) from the detector outputs or telemetry data from various temperature and pressure sensors. The telemetry data is typically scaled into physical units before being presented to the central computing unit 214.

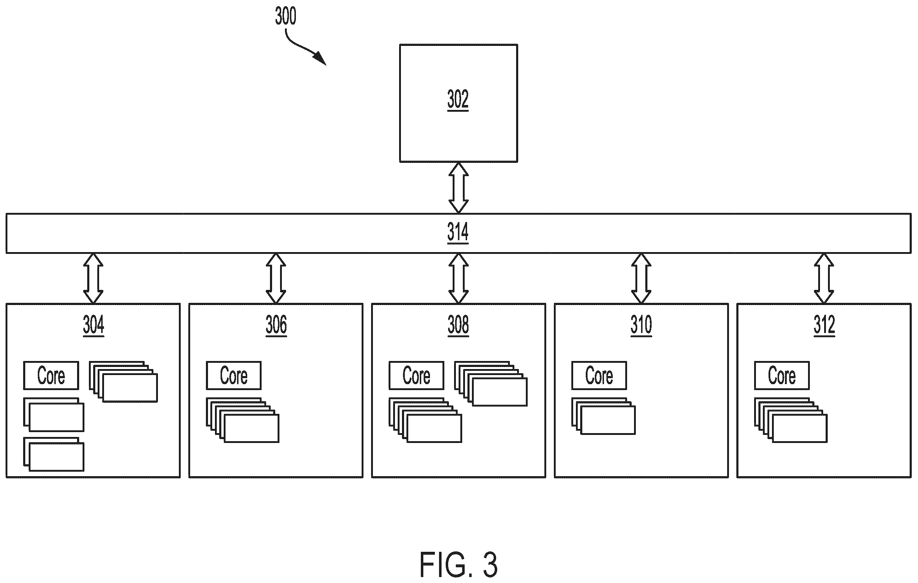

FIG. 3 illustrates a schematic computing environment 300 of a chromatograph according to one or more embodiments of the present disclosure (e.g., chromatograph 200) splitting the operation of the chromatograph into two pieces, a "topworks" process (e.g., a central processing process) and "bottomworks" process (e.g., distributed operation process). For example, the central computing 214 can run a central processing process 302 that provides data to and receives data from one or more control nodes running a distributed operation process via a CAN bus 314. For example, the central processing process 302 can orchestrate the distributed process via settings e.g., valve switching timing, oven temperature set point, or pressure set point. The distributed operation process (e.g., module controls 304 - 312) can execute the directives of the central processing process 302. For instance, the distributed operation process can function to control valves and take measurements of an attribute (e.g., using one or more detectors and/or sensors), and the distributed operation process can provide these attributes to the central processing process (e.g., without analyzing the obtained attributes). The central processing process can then analyze these attributes to determine a physical component of the sample (e.g., flow speed, physical and/or chemical composition). Additionally, and/or alternatively, a distributed operation control node can control one or more processes of the chromatography process and hardware components, such as chromatography module control 304, gas feedthrough control 306, flex module control 308, detector control 310, and/or temperature control 312, any of which can be considered a distributed operation control node. The central processing process 302 can receive data on the hardware configuration of the chromatography module from the chromatography module control 304 (e.g., channel structure, sensor set up, column length, valve configuration), and provide configuration files to the distributed operation control node 304 for operation of the chromatography module hardware and/or communicating data to and from the distributed operation control node 304. The central processing process 302 can receive data from the feedthrough control 306 (e.g., inlet valve and channels structure of the base manifold) and similarly provide configurations to the feedthrough control 306 for operation of the feedthrough hardware (e.g., sequencing of inlet valves and base manifold cavity temperature and pressure) and/or communicating information to and from the distributed operation control node 306. The central processing process 302 can receive data from the flex module control 308 and similarly provide configurations to the flex module control 308 for operation of the flex module and/or communicating information to and from distributed operation control node 308. The central processing process 302 can receive data on the hardware configuration of the detector from the detector control 310 (e.g., type and design of detector such as a TCD) and provide configuration files to the distributed operation control node 310 for operation of the detector and/or communicating information to and from the bottom works control node 310. The central processing process 302 can receive data from the temperature control 312 (e.g., type and design of oven) and provide configuration files to the distributed operation control node 312 for operating parameters of the temperature control (e.g., temperature set points and power demands) and/or communicating information to and from distributed operation control node 312.

The central processing process 302 can include one or more processes (e.g., running on a LINUX based system), such as providing a user interface, an application layer, orchestration services, and/or data storage. For example, the central processing process 302 can communicate with one or more networks and/or services to retrieve configuration files for any of the distributed operation control nodes 304, 306, 308, 310, and/or 312 and store the configuration files in local memory. The distributed operation process can include one or more process (e.g., running on a real time operating system (e.g., FreeRTOS based system)), such as providing a hardware interface and performing real-time tasks and operations, and a single distributed operation process can run each of distributed operation control nodes 304, 306, 308, 310, and/or 312. Additionally, and/or alternatively, the distributed operation process can be specialized at startup via a factory method. For example, the distributed operation process can instantiate a specific class of interface for an object, wherein the class of interface is associated with that specific distributed operation component.

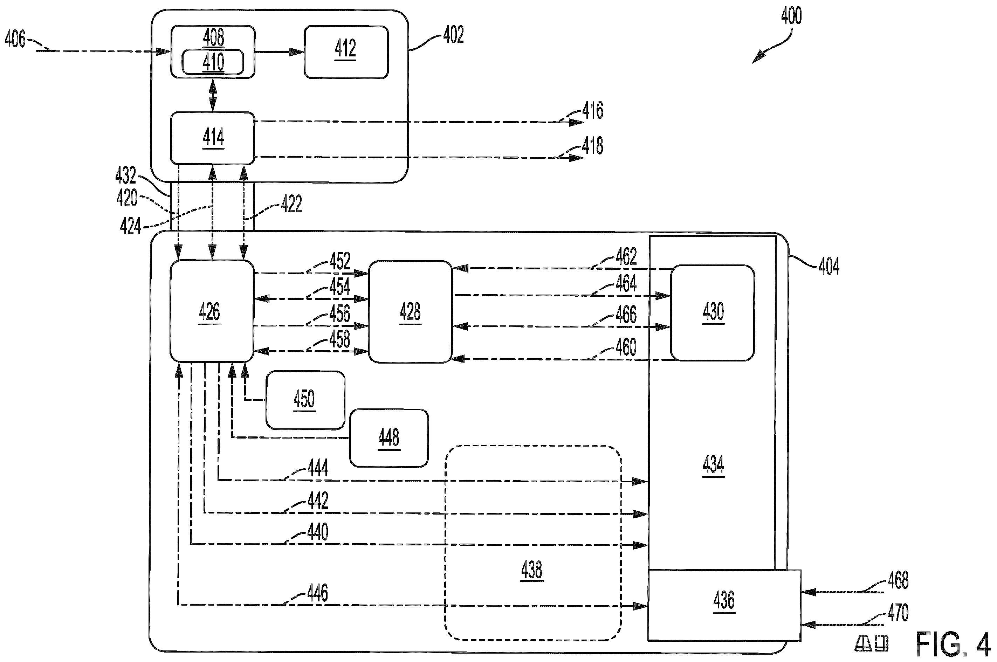

FIG. 4 provides a hardware architecture for the environment 300 of a chromatograph device 400 according to one or more embodiments of the present disclosure. For example, an electrical compartment 402 can include a carrier board 408 hosting a computer-on-module 410 defining a computer hardware (e.g., a printed circuit board (PCB)). The computer-on-module (e.g., system-on-module) and the carrier board can be based on a standard for computer-on-module such as smart mobility architecture (SMARC). The carrier board 408 and the computer-on-module 410 form a computer circuitry including a set of interfaces (e.g., WiFi, CAN, Ethernet). The computer-on-module 410 can communicate with a display 412 (e.g., a user interface) and a termination board, and computer-on-module 410 can receive power from a power source 406 (e.g., DC power). The termination board 414 can provide direct connection via dedicated multicore cable between the inputs and outputs of the system and electronic modules (barriers, isolators, relays), such as providing external communications 416 (e.g., external to the chromatograph 400) and the input and output signals 418. The electrical compartment 402 can provide power 420 (e.g., 24 volt DC power via termination board 414) to a feedthrough control node 426 (e.g., circuitry) of an analytical compartment 404. The electrical compartment 402 can also communicate data to the analytical compartment 404 via a bus 424 (e.g., CAN, Ethernet) and fault line 422 of an electronic feed through 432.

The feedthrough control node 426 can receive communications from every part of the analytical compartment 404 and communicate the received information to the electrical compartment 402 (e.g., for determinations based on the data received from the feedthrough control node 426). For example, the analytical compartment 404 can include one or more analytical modules including a module control node 428 (e.g., circuitry) and a gas chromatograph module 430 (e.g., oven and sensors), a base manifold 434, a gas feedthrough 436 (e.g., fluid intake) of the base manifold 434, a control node 438 for the gas feedthrough 436, a cavity temperature node 450 and/or a cavity pressure node 448. While the gas feedthrough 436 can receive the fluid inputs of the sample 468 gas and the carrier 470 gas for the base manifold and gas chromatograph module 430, the feedthrough control node 426 can receive and provide temperature control data 446 from and to the control node 438 for the gas feedthrough 436, in addition to providing control signals 444 for multiple stream valves, control signals 442 for multiple sample shutoff channels and valves, and/or control signals 440 for pressure measurements to the control node 438 for the gas feedthrough 436. The feedthrough control node 426 can also receive data from the cavity temperature module 450 and cavity pressure module 448 for the cavity of the base manifold and channels associated therewith.

The feedthrough control node 426 can also communicate with the module control node 428, and the module control node 428 can communicate with (e.g., operate) the gas chromatograph module 430. For example, the gas chromatograph module 430 can provide temperature signals 462 on temperature control within the gas chromatograph module 430 and detector output signals 460 provides the output of multiple (e.g., 6) different detectors (e.g., TCD outputs) of the gas chromatograph module 430 to the feedthrough control node 426. The module control node 428 can provide control signals 464 to multiple pressure control valves of the base manifold 434, and can provide and receive multiple (e.g., 4) pressure control signals 466 to and from the gas chromatograph module 430 to apply and/or applied by the gas chromatograph module 430. For example, the chromatograph module 430 can include a sample valve to control the timing and flow of the analysis (e.g., sample inject, backflush), such that the sample valve is used to inject the sample and carrier in the chromatographic steps. The sample can be injected by filling a loop with sample and then pushing that plug of gas with the pressure-controlled carrier in the column for separation. The one or more module control nodes 428 can the communicate relevant data (e.g., detector output signals 460) with the feedthrough control node 426 via a CAN bus 454 and fault line 458, and receive power 452 (e.g., 24 volt DC power) and ID information 456 from the feedthrough control node 426.

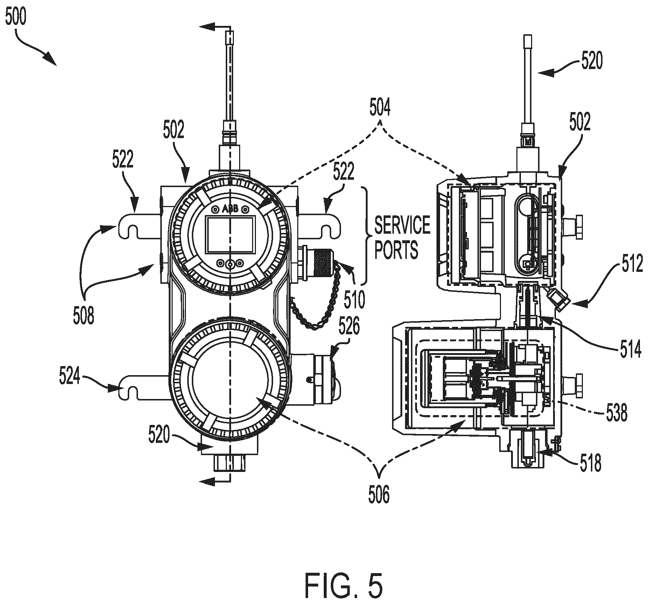

FIG. 5 illustrates an example chromatograph device 500 including a single gas chromatograph module according to one or more embodiments of the present disclosure. For example, the chromatograph device 500 can include a flameproof (e.g., ex-d) housing 502 that houses the electronic compartment 504, an explosion proof (e.g., ex-d) electronic feed through 514, the analytical compartment 506, and, optionally, a WIFI antenna 520. The housing 502 can then be one housing divided into three functional portions, one for the electronic compartment 504, one for the electronic feedthrough portion 514, and one for the analytic compartment 504. The portion of the housing 502 for the analytical compartment 506 can house the analytical module 516 that perform the measurements (e.g., the gas chromatography process) and the portion of the electronic compartment 504 can house the central computer, which coordinates the different modules of the device 500 and the terminal board, which allows for the connection of the electronic compartment 504 to the external environment (e.g., external communication processes for communication to systems outside the device 500). The portion of the housing 502 for the electronic feedthrough 514 can house the electronic feedthrough 514 used to connect the analytical compartment 506 and the electronic compartment 504 and provide communication electrical connections between the two compartments.

The housing 502 can also include a bottom drain portion for housing a drain 518 (e.g., a breather drain, bottom cavity), a gas feedthrough portion 556 for housing a gas feedthrough 526, a service port portion 510 for housing service ports based on the intended application, and a top drain portion 512 for housing a top drain (e.g., a breather drain, top cavity). The chromatograph device 500 can also include a containment system 538 for housing the gas chromatograph module 516 providing an additional layer of explosion proof protection. The chromatograph device 500 can also provide user connections 508, such as a top bracer 522 and bottom bracer 524, and/or further ports.

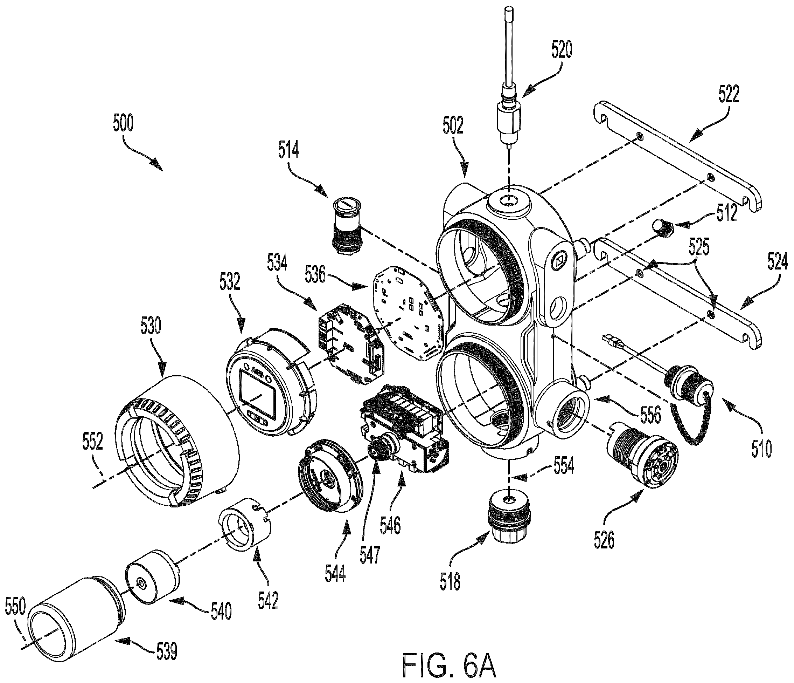

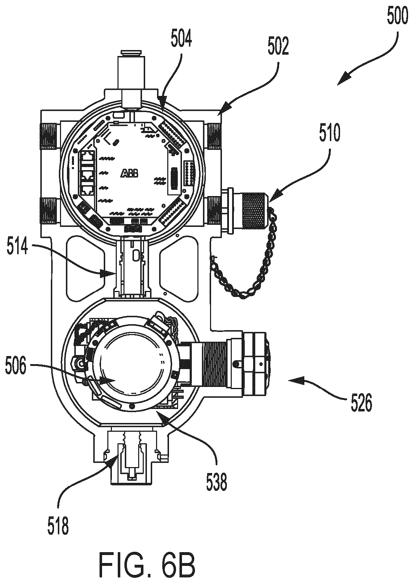

FIGS. 6A and 6B illustrate views and variants of additional and/or alternative hardware components of the chromatograph device 500. For example, FIG. 6A shows a top down view of chromatography device 500 including housing 502, electrical compartment 504, analytical compartment 506, and electronic feedthrough 514.The chromatography device 500 in FIG. 6A can include the gas feedthrough housing portion 556 and gas feedthrough 526 disposed laterally adjacent to the gas chromatography module 506 for providing fluid (e.g., sample gas, carrier gas) to the gas chromatography module 506. Chromatography device 500 also shows a computing board 534 (e.g., a combined terminal board, carrier board, and computer-on-module housed within the electronic compartment 504 of the housing 502, and service port housing portion 510 disposed laterally adjacent to the electronic compartment 504. Drain 518 is shown disposed laterally adjacent to the gas chromatography module 506 for releasing pressure in the cavity of gas chromatograph module 506, e.g., the containment system 538 of the analytical compartment 506.

As shown in FIG. 6B, the housing 502 can provide a shelter-less (e.g., IP66) enclosure with front accessibility and a dual seal rating (e.g., the explosion proof electronic feed through 514). The electrical compartment 504 can include a visible housing 530 (e.g., a housing with a see through face) that can be installed onto the portion of housing 502 for the electrical compartment 504. The visible housing 530 can therefore assist in housing a user interface display 532 (e.g., a 4 inch display with gesture control) that is atop a computer-on-module 534 affixed to a carrier 536 inside the electrical compartment 504. Each of the visible housing 530, display 532, computer-on-module 534, and carrier 536 can be positioned along axis 552. The analytical compartment 506 can include a chromatograph housing 539 affixed to a carrier 544 (e.g., containing a module control node and acting as a mechanical and electrical interface to the rest of the analytical module), such as via a threaded connection, included as part of the containment system 538. The chromatograph housing 539 and carrier 544 can then contain the chromatograph structures (e.g., heater plate 542 and chromatograph module 540). The chromatograph carrier 544 can then receive a manifold post 547 through the carrier 544 and the carrier 544 can be affixed to the manifold 546 and the manifold 546 put in fluid communication (e.g., coupled to and able to provide and receive fluid) with the gas feedthrough 526. The chromatograph housing 539, chromatograph module 540, the heater plate 542, the carrier 544, the manifold post 547, and the base manifold 546 can all be position along axis 550 within the analytical compartment 506. The optional WIFI antenna 520 and the drain 18 can be positioned along with the same vertical axis of the chromatograph device 500 and affixed to the housing 502 (e.g., via threaded connections). The drain 512 and bracer 522 can be affixed to the top portion of the housing 502 (e.g., on the back side of the electrical compartment 504 opposite the visible housing 552 via screws), and the bottom bracer 524 can be affixed to the bottom portion of the housing 502 (e.g., on the back side of the analytical compartment 506 opposite the chromatograph housing 550 via screws).

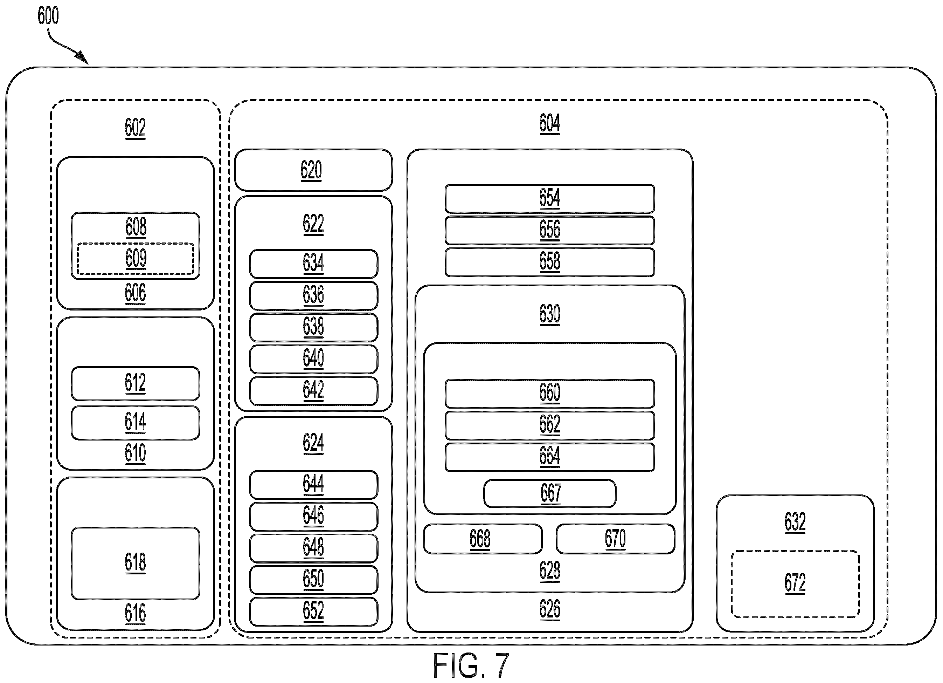

FIG. 7 shows a schematic representation of a software and hardware architecture 600 for a chromatograph device (e.g., chromatograph device 500) according to one or more embodiments of the present disclosure. For example, the architecture 600 can include an electrical system 602 and an analytical system 604. The electrical system 602 can include a carrier board 606 for a computer-on-module 608 (e.g., SMARC, SMARC 2.0) running a central processing software 609, a termination module 610 for power input and regulation processes 614 and an input/output manager 612, and/or an LCD display board 616 with a display 618 (e.g., a 4 inch LCD display). The computer-on-module 608, termination module 610, and a display 618 can communicate and provide electrical connections for power and faults similarly to how the electrical compartment 402 of the chromatograph device 400 communicates with the analytical compartment 404 of the chromatograph device 400.

The analytical system 604 can include an electrical feedthrough 620, a feedthrough control node 622, a module control node 624, a base manifold 626, an analytical module 628 including a gas chromatograph module 630 on the base manifold 626, and a gas feedthrough 632. The feedthrough control node 622 can run one or more processes associated with the gas chromatography analysis process, such as the distributed operation process 634 running the distributed operation software, the temperature control processes 636 for the base manifold, the valve control 638 for the fluid streams (e.g., through the gas feedthrough 632), the pressure measurements 640 (e.g., taken by one or more sensors of the gas chromatography module 630 and/or base manifold 626), and the temperature measurements 642 (e.g., taken by the base manifold 626 and/or the analytical module 628 including the gas chromatography module 630).

The module control node 624 can also run one or more processed associated with the gas chromatography analysis process, such as the distributed operation process 644 running the distributed operation software, the pressure control processes 646 (e.g., for the analytical module 628 and gas chromatography module 630), the temperature control processes 648 (e.g., for the analytical module 628 and gas chromatography module 630), the valve control processes 648 (e.g., for the analytical module 628 and gas chromatography module 630), and the detector interfaces 652 (e.g., for the one or more detectors of gas chromatography module 630).

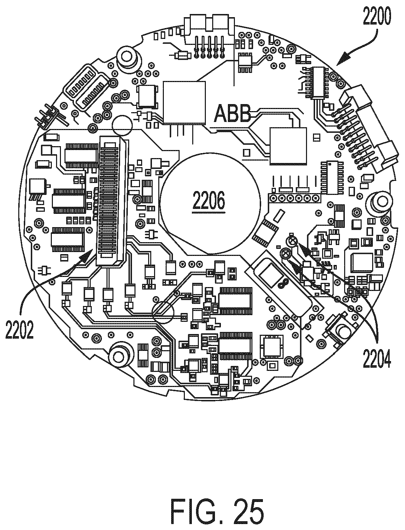

The base manifold 626 can include channels 658 for passing fluid to and from the gas feedthrough 672 and the gas chromatography module 630. Base manifold 626 can also include one or more sample valves 654 (e.g., a plurality of valves for sequencing or regulating the fluid sample input to the gas chromatography module 630 via channels 658 of the base manifold 626) and one or more shut off valves for shutting off the flow of fluid into and/or out of the channels 658 base manifold 626, one or more control valves 656 for controlling the speed and/or pressure of received and/or expelled fluid (e.g., pilot valves and/or electronic proportional control (EPC) valves). The analytical module 628 can include a heater 668 for heating the received fluid sample as part of the chromatography process and one or more temperature sensors 670 (e.g., sensor, detector) for sensing the temperature created by the heater 668 and/or the heat of the fluid sample. The gas chromatography module 630 can include columns and loops 662 for passing the fluid sample through the gas chromatography module 630 to be detected by one or more detectors 660 (e.g., thermal conductivity detectors (TCD)) of the chromatograph module 630. The gas chromatography module 630 can also include different arrangements of sample valve arrangements 664 (e.g., reverse column arrangement 2102 of FIG. 25A, back-flush arrangement 2112 of FIG. 25B, and heart-cut arrangement 2122 of FIG. 25C) for exchanging and processing the received fluids with gas chromatography module 630. The gas chromatography module 630 can also include one or more pressure sensors 667 (e.g., sensor, detector) for sensing the pressure (e.g., of the fluid sample and/or carrier fluid) within the gas chromatography module 630. The gas feedthrough 632 can include a plurality of channels 672 (e.g., twelve gas passages) for receiving from and providing fluid to the analytical module 628, and can optionally include a heater.

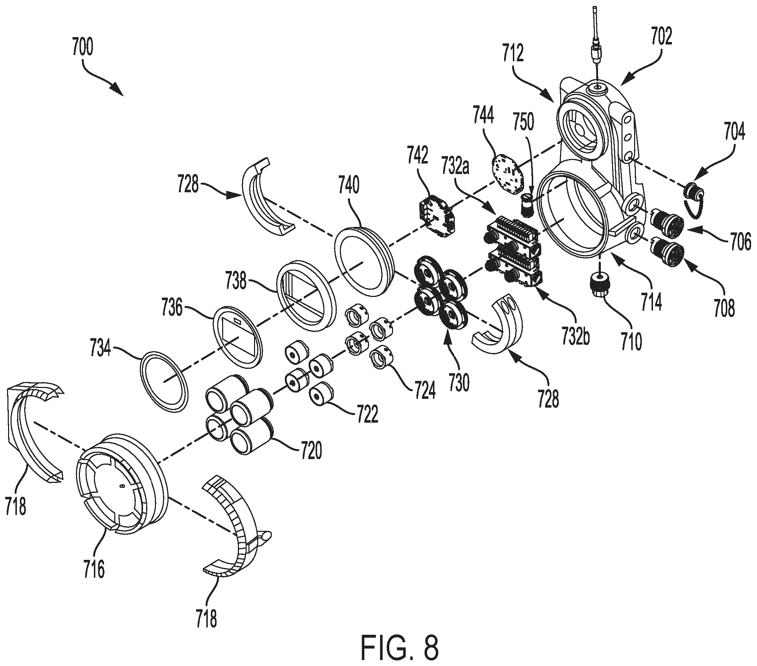

FIG. 8 illustrates an example chromatograph device 700 including multiple gas chromatograph modules (e.g., of analytical modules) on multiple manifolds according to one or more embodiments of the present disclosure. For example, chromatograph device 700 can include housing 702 that houses the electrical compartment 712, the electrical feedthrough 750, and the analytical compartment 714. The electrical compartment 712 can include a visible housing that provides a user interface. For example, housing ring 734 can be positioned above a display 736 (e.g., a 7 inch touchscreen display), which is in turn positioned on a housing ring base 738. The housing ring base 738 can be positioned on the display board 740 and encircle by housing rings 728 on either side. The display board 740 can be positioned above computer-on-module board 742 (shown in FIG. 8 as including the carrier board, termination board, and computer-on-module) which is positioned above the carrier 744 (e.g., the mechanical holder and/or shield for the computer-on-module board 742). The display 736, display board 740, and computer-on-module board 742 can be electrically connected to each other, such that the computer-on-module board 742 can provide signals that cause the display 736 to display one or more images and/or prompts to a user and receive one or more signals from a user, acting as a user interface. The housing ring 734, display 736, housing ring base 738, display board 740, computer-on-module board 742, and carrier 744 can therefore be housing within the electrical compartment 712, and positioned and centered along axis 746.

The analytical compartment 714 can include an external housing 716 positioned above a plurality of gas chromatograph modules and sealed to the housing 702. For instance, the external housing 716 can be positioned above and around a plurality of containment systems 720, which are affixed to a respective plurality of carriers 730 (e.g., each for a separate module control node) and thereby each contain a chromatograph module 722 and a heater plate 724). Each carrier 730 can receive a manifold post 752 (e.g., through the center of carrier 730) and affixed to the manifold 732. In the example of chromatograph device 700, two manifolds 732 are provided, with each manifold providing two manifold posts 752. Two carriers 730 can then be affixed to each manifold 732, resulting in the analytical compartment 714 housing four chromatograph modules 722 on two manifold plates. The external housing 716, the containment systems 720, the chromatograph modules 722, the heater plates 724, the carriers 730, and the manifolds 732 can be centered around and/or positioned along axis 748 inside analytical compartment 714.

Chromatograph device 700 can include two gas feedthroughs capable of liquid injection, first gas feedthrough 706 and second gas feedthrough 708. The first gas feedthrough can be fluidically connected to the first manifold 732a, and the second gas feedthrough 708 can be fluidically connected to the manifold 732b. The chromatograph device 700 can include drain 710 fluidically connected to analytical compartment 714 for releasing or retaining an atmosphere in analytical compartment 714. The chromatograph device 700 can include one or more service ports 704 for electronic communication with one or more further devices.

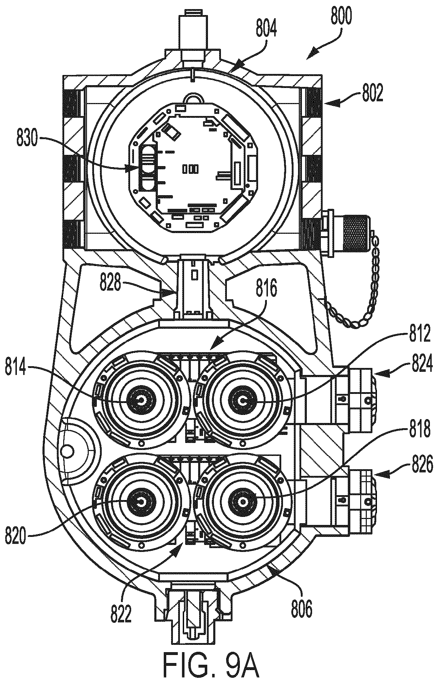

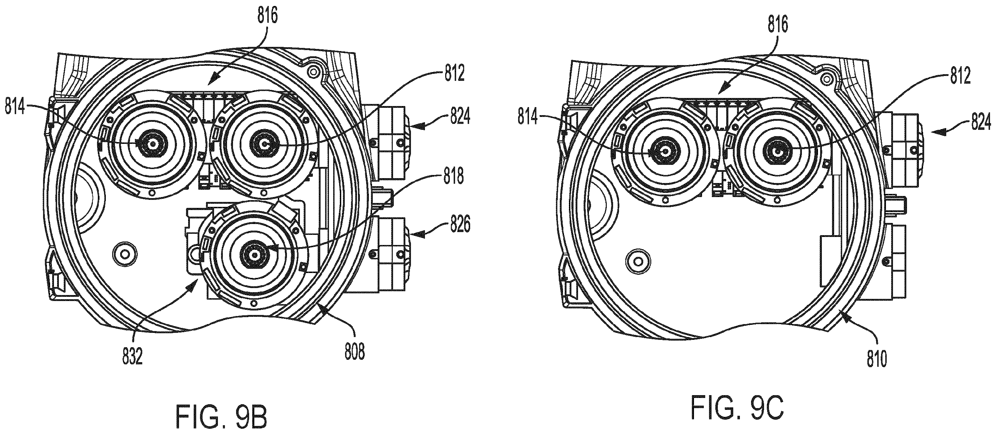

FIGS. 9A, 9B, and 9C illustrate views and variants of a chromatograph device 800. For instance, chromatograph device 800 can include a single housing 802 that houses an electrical compartment 804, an electrical feedthrough 828, and an analytical compartment 806. The electrical compartment 804 can include the computer-on-module board 830 (e.g., running a central processing software), which includes the computer-on-module, carrier, and termination board, in electrical communication (e.g., coupled to and able to provide and receive electrical data) with the components of the analytical compartment 806 (e.g., running the distributed operation software) via the electronic feedthrough 828. As shown in FIG. 9A, the analytical compartment can include two base manifolds, first base manifold 816 and second base manifold 822. Each base manifold can utilize two chromatograph modules, such that first base manifold 816 utilizes first chromatograph modules 812 and second chromatograph module 814, while second base manifold 822 utilizes third chromatograph module 818 and second chromatograph module 820. Each of the base manifolds can be in fluid communication with (e.g., can be fluidly coupled to) an independent gas feedthrough, such that base manifold 816 is in fluid communication with gas feedthrough 824 and base manifold 822 is in fluid communication with gas feedthrough 826. As a result, the chromatograph device can provide for the measurement and analysis performed by the analytical modules of one base manifold to be conducted independently from and in parallel to the measurement and analysis being performed by the analytical modules of another base manifold in the same chromatograph device.

As shown in FIG. 9B, base manifold 822 can be exchanged with the base manifold 832, utilizing the third chromatograph module 818 and in fluid communication with the gas feedthrough 826. The computer-on-module board 830 can update the configuration of the analytical compartment 808 to reflect the exchanged base manifold 832 without affecting the base manifold 816 or chromatograph modules 812, 814 utilized by the base manifold 816.

As shown in FIG. 9C, the base manifold 832 can be removed (and the gas feedthrough 826, now having no base manifold to communicate fluid to and from), leaving only the base manifold 816 utilizing the first chromatograph module 812 and the second chromatograph module 814. The computer-on-module board 830 can update the configuration of the analytical compartment 808 to reflect the removed base manifold 832 without affecting the base manifold 816 or chromatograph modules 812, 814 utilized by the base manifold 816.

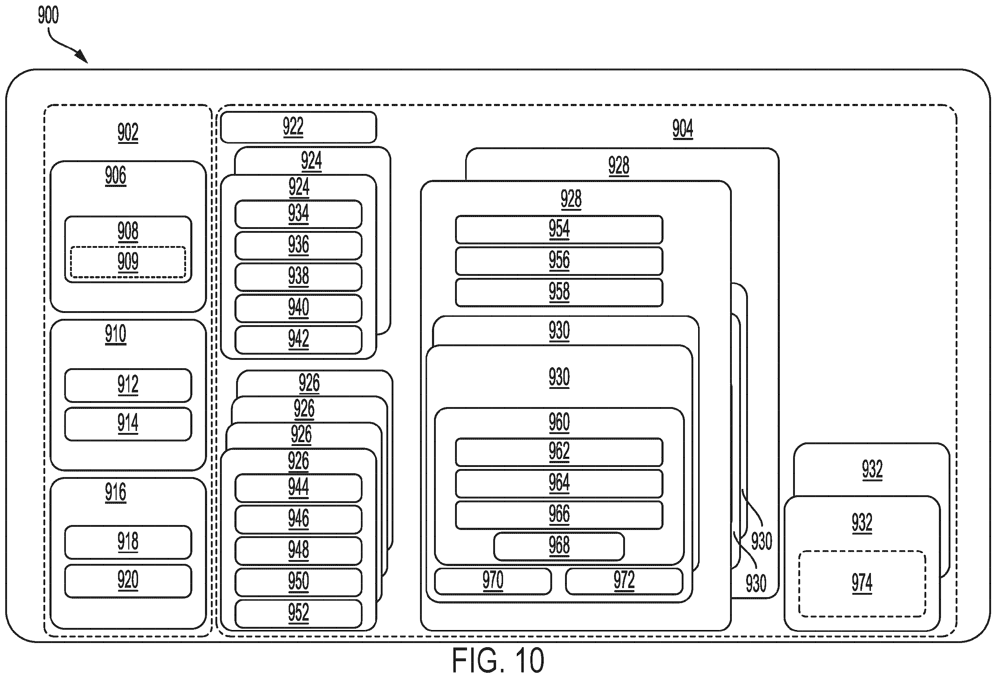

FIG. 10 shows a schematic representation of a software and hardware architecture 900 for a chromatograph device (e.g., chromatograph device 700 and/or 800) according to one or more embodiments of the present disclosure. For example, the architecture 900 can include an electrical system 902 located in an electrical compartment and an analytical system 904 located in an analytical compartment. The electrical system 902 can include a carrier board 906 for a computer-on-module 908 (e.g., SMARC, SMARC 2.0) running a central processing software 909, a termination module 910 for power input and regulation processes 914 and an input/output manager 912, and/or an LCD display board 916 with a display 918 (e.g., a 4 inch LCD display) and a touch controller 920. The computer-on-module 908, termination module 910, and the display 918 can and provide electrical connections for power and faults similarly to how the electrical compartment 402 of the chromatograph device 400 communicates with the analytical compartment 404 of the chromatograph device 400.

The analytical system 904 can include an electrical feedthrough 922, a feedthrough control node 924 for each base manifold 928, a module control node 926 for each analytical module 930, one or more base manifolds 928, one or more analytical modules 930 for each base manifold 928, and a gas chromatograph module 960 for each analytical module 930, and a gas feedthrough 932 for each base manifold 928. The feedthrough control nodes 924 can run one or more processes associated with the gas chromatography analysis process, such as the distributed operation process 934 running the distributed operation software, the temperature control processes 936 for the base manifold, the valve control 938 for the fluid streams (e.g., through the gas feedthroughs 932), the pressure measurements 940 (e.g., taken by one or more sensors (e.g., sensors, detectors) of the gas chromatography module 960 and/or base manifold 626), and the temperature measurements 942 (e.g., taken by the analytical module 628 including the gas chromatography module 960 and/or base manifold 626). In one or more embodiments, the temperature and pressure sensors (e.g., sensors, detectors) linked to the feedthrough control node 924 are located in the base manifold of the analytical compartment. the temperature and pressure sensors can be used for telemetry (e.g., infeed pressure, analytical compartment temperature) rather than control. However, one exception is that the gas feedthrough 932 can be pre-heated, which is taken care of by the feedthrough control node 924.

The module control nodes 926 can each run one or more processes associated with the gas chromatography analysis process for the module control node's 926 respective analytical modules 930, such as the distributed operation process 944 running the distributed operation software, the pressure control processes 946 (e.g., for the analytical module 930 and gas chromatography module 960), the temperature control processes 948 (e.g., for the analytical module 930 and gas chromatography module 960), the valve control processes 950 (e.g., for the analytical module 930 and gas chromatography module 960), and the detector interfaces 952 (e.g., for the one or more detectors of gas chromatography module 960).

The base manifolds 928 can each include channels 958 for passing fluid to and from the respective gas feedthrough 932 and the one or more gas chromatography modules 960 utilized by the respective base manifold 928. Base manifold 928 can also include one or more sample valves 954 (e.g., a plurality of valves for sequencing or regulating the fluid sample input to the gas chromatography module 950 via channels 958 of the base manifold 928) and one or more shut off valves for shutting off the flow of fluid into and/or out of the channels 958 base manifold 928, one or more control valves 956 for controlling the speed and/or pressure of received and/or expelled fluid (e.g., pilot valves and/or electronic proportional control (EPC) valves). Each analytical module 930 can include a heater 970 for heating the received fluid sample as part of the chromatography process and one or more temperature sensors 972 for sensing the temperature created by the heater 970 and/or the heat of the fluid sample. Each gas chromatography module 960 can include columns and loops 964 for passing the fluid sample through the gas chromatography module 960 to be detected by one or more detectors 962 (e.g., TCDs) of the chromatography module 960. Each gas chromatography module 960 can also include different arrangements of valve arrangements 966 (e.g., reverse column arrangement 2102 of FIG. 25A, back-flush arrangement 2112 of FIG. 25B, and heart-cut arrangement 2122 of FIG. 25C) for exchanging, mixing, and processing received fluids with gas chromatography module 960. The gas chromatography module 960 can also include one or more pressure sensors 968 for sensing the pressure (e.g., of the fluid sample) within the gas chromatography module 960. Each gas feedthrough 932 can include a plurality of channels 974 (e.g., twenty gas passages) for receiving from and providing fluid to the analytical modules 930 of each base manifold 928, and can each optionally include a heater. For instance, a first gas feedthrough 932 can provide fluid to a first base manifold 928 and utilize twenty channels 974 for providing fluid to the two analytical modules 930 on the first base manifold 928, and a separate second gas feedthrough 932 can provide fluid to a second base manifold 928 and utilize another twenty channels 974 for providing fluid to the two analytical modules 930 on the second base manifold 928.

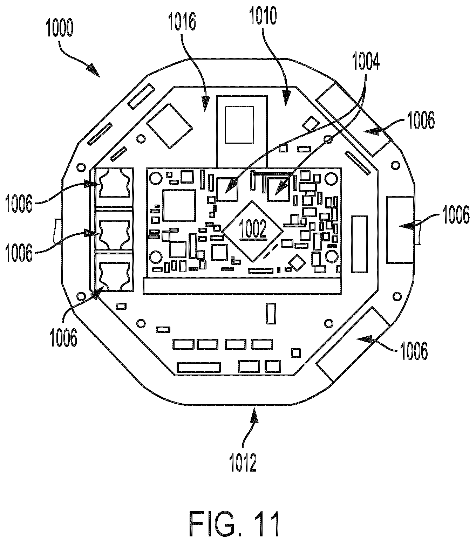

FIG. 11 is an exemplary hardware architecture 1000 of an electrical circuitry of a chromatograph device, which can function as the brain of the gas chromatograph according to one or more embodiments of the present disclosure. For example, architecture 1000 can include the computer-on-module 1008 disposed onto the carrier 1010, which is turn disposed onto the terminal board 1012. The computer-on-module 1008 can include industry standard computer components on a module, run an instance of the central processing software (e.g., central processing software 909), and allow for an interface to other modules, such as a feedthrough control node (e.g., feedthrough control node 924) and a module control node (e.g., module control node 926). Additionally, and/or alternatively, the different interfaces (e.g., input/output ports (I/O) 1006, network interface 1014, CAN bus 1016, serial ports, secure digital (SD) port) can be distributed on the periphery of the terminal board 1012 and/or carrier 1010 to form a card edge connector, allowing for easy connection of the different interfaces by a user and reducing space demands by reducing the space needed to establish connections between different circuitries (e.g., separate PCBs and/or sensors).

The architecture 1000 can provide these functionalities by utilizing various components. For example, architecture 1000 can include a processor 1002, such as a central processing unit (CPU), controller, and/or logic, that executes computer executable instructions for performing the functions, processes, and/or methods described herein. In some examples, the computer executable instructions are locally stored and accessed from a non-transitory computer readable medium, such as memory/storage 1004, which may be a hard drive or flash drive. Memory 1004 may include read only memory (ROM) including computer executable instructions for initializing the processor 1002, and/or the random-access memory (RAM) as the main memory for loading and processing instructions executed by the processor 1002. The architecture 1000 may include I/O 1006 for receiving or sending signals and/or data from one or more sensor(s) (e.g., flow meters, temperature, pressure, amplifiers, and/or density transmitters, sensors, and/or smart sample handling systems) and/or one or more user interfaces (e.g., a display). The architecture 1000 may include a network interface 1014. The network interface 1014 may connect to a wired network or cellular network and to a local area network or wide area network, such as an Ethernet connection and WIFI connection. The device/system 1000 may also include a bus 1016 (e.g., CAN bus) that connects the processor 1002, memory 1004, I/O 1006, and/or the network interface 1014. The components within the architecture 1000 may use the bus 1016 to communicate with each other and as an internal interface to the analytical compartment. The components within the device/system 1000 are merely exemplary and might not be inclusive of every component, server, device, computing platform, and/or computing apparatus within the device/system 1000.

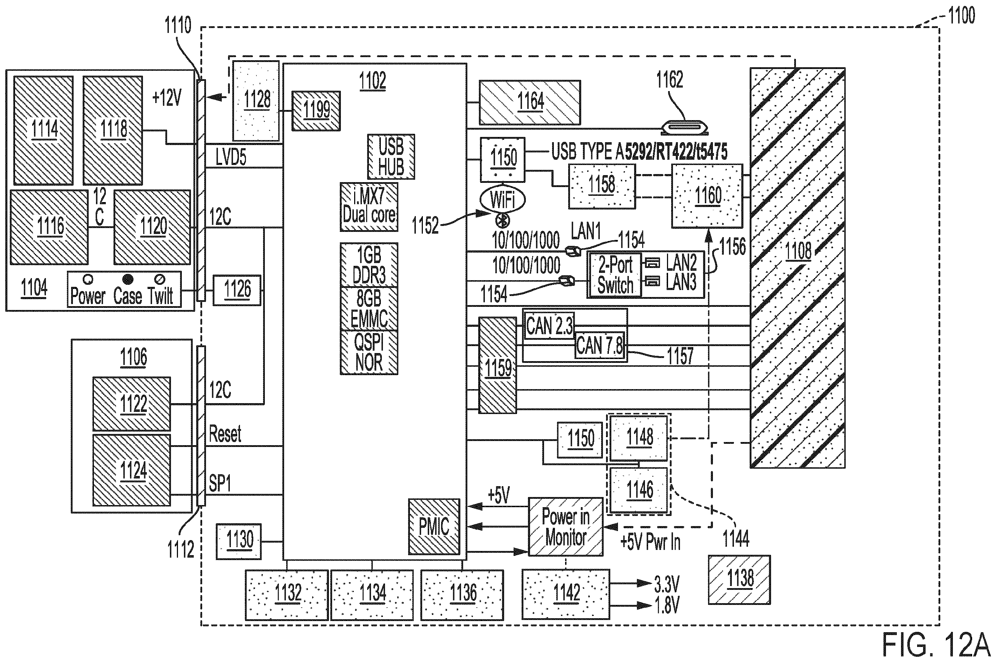

FIG. 12A is a schematic representation of the computer-on-module carrier PCB 1100 for the hardware architecture 1000. For instance, computer-on-module carrier PCB 1100 can include the computer-on-module (e.g., SMARC 2.0, COM Express, Oseven) 1102 disposed onto the computer-on-module carrier PCB 1100, the touch display 1104, the display board 1106, the terminal board controller 1108, I/O 1110 for communication between touch display 1104 and computer-on-module 1102, and I/O 1112 for communication between display board 1106 and computer-on-module 1102. As a result, in one or more embodiments, the central processing software can be run entirely on a single PCB (or PCB stack) and contained within the electrical compartment of a chromatograph device.

As shown in FIG. 12A, computer-on-module 1102 can include an SD I/O 1199 in communication with an SD card 1128 (e.g., micro SD card) of the computer-on-module carrier PCB 1100, and a universal serial bus (USB) hub 1195 for communication with a micro USB connected device and/or a wirelessly connected device (e.g., via WIFI and/or Bluetooth). Computer-on-module 1102 can also include a power management integrated circuit (PMIC) 1197, which can perform various functions for the computer-on-module 1102 and/or SMARC carrier PCB 1100 (e.g., DC-DC conversion, battery charging, power-source selection, voltage scaling, and/or power sequencing) and/or receive and provide electrical power to a power in monitor component 1140 of the SMARC carrier PCB 1100, which power in monitor component 1140 can in turn provide power to the carrier power regulation component 1142 (e.g., which can output different voltage outputs such as a 3.3V output and a 1.8V output). The computer-on-module 1102 can also include a processor 1196 (e.g., i.MX7 Dual Core processor) and memory 1193 (e.g., dynamic random access memory (DRAM)) and 1192 (e.g., embedded multimedia card (eMMC)) as described with respect to architecture 1000. The computer-on-module 1102 can also include a quad serial peripheral interface (QSPI) 1194 for communicating with an external flash memory (e.g., NOR flash memory).

The touch display 1104 can include and LCD display backlight 1114 and an LCD display 1118 to generate one or more displays caused by a control signal of the computer-on-module 1102. Touch display 1104 can also include a display configuration memory 1116 and a microchip touch controller 1120 for a processing user input. LCD display board 1106 can similarly include a display memory 1122 and a graphic controller 1124 for generating a display caused by a control signal of the computer-on-module 1102. An LED 1126 (e.g., forward current (I/F)) can be provided on computer-on-module carrier PCB 1100, such as between I/O 1110 and computer-on-module 1102 for signaling, illumination, and/or visual verification for a user.
computer-on-module carrier PCB 1100 can also include a trusted platform module (TPM) 1130 as a dedicated microcontroller designed to secure hardware through integrated cryptographic keys. For example, the TPM 1130 can conform to one or more industry standards, such as the standard ISO/IEC 11889. Computer-on-module carrier PCB 1100 can also include one or more boot services, such as an SD boot 1132 and alternative boot 1134 service to provide initialization, self-test and application loading functionality to payload and on-board computers such as the computer-on-module 1102. Computer-on-module carrier PCB can also include a serial debug controller 1164 for ensuring smooth functioning of the serial ports, and perform debug identification and rectification operations. Computer-on-module carrier PCB 1100 can also include USB hub 1150 which can receive a USB input and integrate and/or be coupled to a wireless communication hub 1152 (e.g., for WIFI and/or Bluetooth communication). USB hub 1150 can be in communication with a USB to quart interface 1158, which is in turn in communication with a serial driver 1160. The serial driver 1160 can communicate with the terminal board controller 1108 through one or more lines of communication, thereby providing communication between the USB hub 1195 and the terminal board controller 1108. Computer-on-module carrier PCB 1100 can also include LAN ports 1154 for communication with the computer-on-module 1102, and one or more LAN ports 1154 can be in communication with a multiple port switch 1156 (e.g., a two port switch) for multiple further LAN connections. Computer-on-module carrier PCB 1100 can also include one or more CAN bus 1157 for communication with the terminal board controller 1108, which can utilize one or more voltage translators 1159 interposed between the computer-on-module 1102 and the CAN bus 1157. Computer-on-module carrier PCB can also include a real time clock (RTC) 1150 for timing services, which can be utilized by the computer-on-module 1102 in combination with one or more control system expansion ports 1148 and associated embedded configurations 1144. Via a serial mode I/O control process, the one or more expansion portions 1148 may also be in communication with that serial driver 1160. Computer-on-module carrier PCB 1100 can also include one or more alarm 1138 processes and devices for providing an alarm to a user regarding one or more processes or hardware components of the chromatograph device.

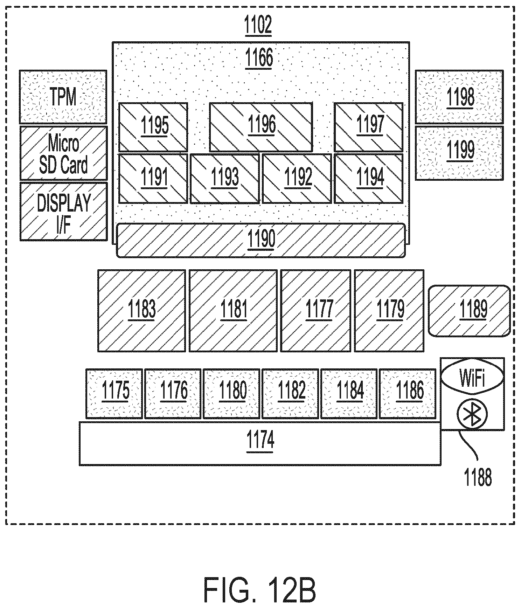

FIG. 12B is a schematic representation of the physical arrangement of components of the computer-on-module carrier PCB 1100 according to one or more embodiments of the present disclosure. As shown, the computer-on-module carrier PCB 1100 can act as a carrier for the computer-on-module 1102. The computer-on-module carrier PCB 1100 and the computer-on-module 1102 can include the same distribution of components as described with respect to FIG. 12A, with the USB hub 1195, the processor 1196, PMIC 1197, memory 1193, memory 1192, and QSPI 1194 provided by the hardware of the computer-on-module 1102 (e.g., a separate circuit board, PCB, or designated section of the computer-on-module carrier PCB 1100). The computer-on-module 1102 can also include a dual Ethernet port 1191 for communicating via an Ethernet interface with the one or more components of the chromatograph device or further devices. The computer-on-module 1102 can communicate with the computer-on-module carrier PCB 1100, and the individual components of the computer-on-module carrier PCB, via a computer-on-module connector interface 1162. In addition to those components and processes the computer-on-module carrier PCB 1100 provides as described with respect to FIG. 12A, the computer-on-module carrier PCB 1100 can include a computer-on-module carrier reset process 1199, further USB connections 1175, serial peripheral interfaces 1180, further CAN connectors 1176, one or more I/O ports 1182, one or more power connections 1184, one or more further communication ports 1186 one or more Ethernet ports and communication services 1183 (e.g., gigabit Ethernet), and a connector 1174 for interfacing with the terminal board controller 1108 and I/O ports of the chromatograph device (e.g., I/O ports 1006).

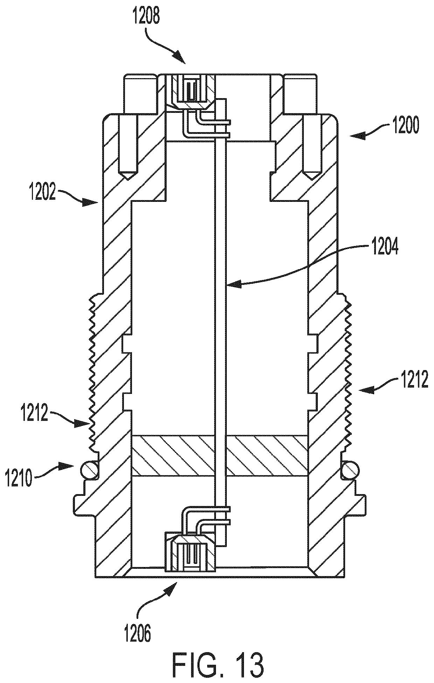

The electrical compartment of a chromatograph device according to one or more embodiments of the present disclosure can be placed in electrical communication with an analytical compartment using an electrical feedthrough. As shown in FIG. 13, an electrical feedthrough 1200 can provide an explosion proof housing 1202 to seal the electrical compartment from and fluids and/or combustion occurring in the analytical compartment. Housing 1202 can be provided with a threaded fitting for affixing to the analytical compartment, and a seal 1210 (e.g., an o-ring) for assisting in establishing a seal between the electrical compartment and the analytical compartment. The explosion proof housing 1202 can provide an electrical interface 1206 for the analytical compartment and an electrical interface 1208 for the electrical compartment. The electrical interface 1206 can be put in electrical communication with the electrical interface 1208 using a PCB 1204 contained by the housing 1202. By provided a threaded fitting and encapsulation, and a PCB which can provide a lower cost and spatial requirement, the electrical feedthrough 1200 withstood 1000 PSI in both directions (e.g., at both ends) of the electrical feedthrough 1200 during testing. Accordingly, in one or more embodiments, the encapsulation and/or potting provided by the electrical feedthrough 1200 allows for the use of a PCB interconnect between the two compartments (e.g., the electrical compartment and the analytical compartment) that is also flame-proof.

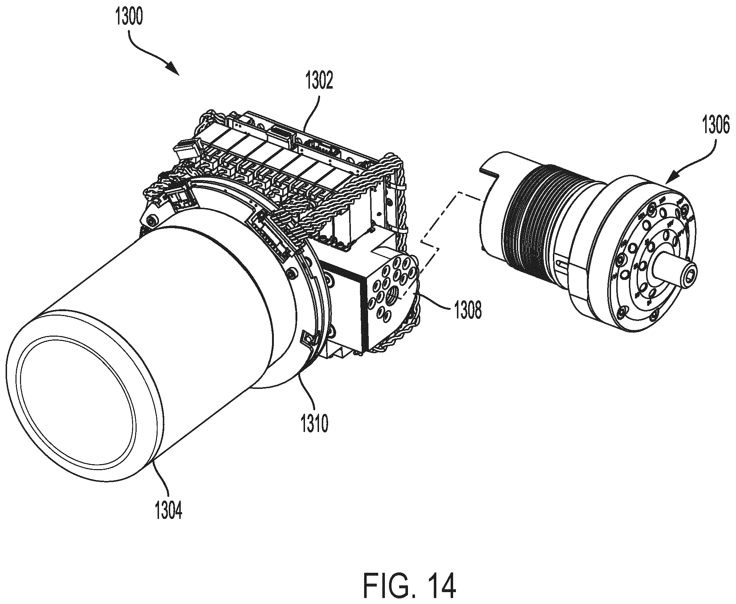

The analytical compartment can include a base manifold and an analytical module including a gas chromatograph module in fluid communication with a gas feedthrough according to one or more embodiments of the present disclosure. As shown in the analytical compartment environment 1300 of FIG. 14, the gas chromatograph module 1304 can be affixed to a carrier 1310 (e.g., fluidic interface, electrical interface, and module control node) forming an analytical module. The analytical module can be affixed to a base manifold 1302, which base manifold 1302 can include a plurality of fluid channels forming a fluid channel interface 1308 for communicating gas between a gas feedthrough 1306 and the analytical module. The fluid channels can correspond to the fluid channels of the gas feedthrough 1306, including an arrangement of the fluid channel interface 1308 corresponding to an arrangement of fluid channels of the gas feedthrough 1306.

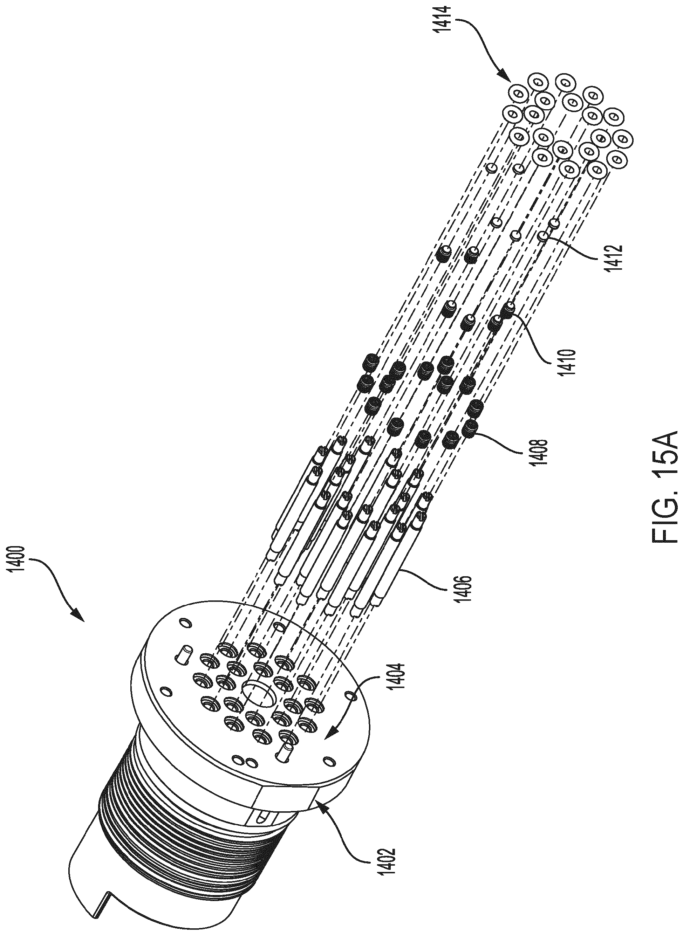

For example, as shown in FIG. 15A, the gas feedthrough 1400 can include a hub 1402 through a plurality of channels run and interface with an arrangement of channels of a base manifold (e.g., base manifold 1302). The channels can include injection seals 1414 at the mouth of the channels and a modified dowel pins 1406 within the channels and hub 1402. One or more channels can include filter frits 1412 and flow restrictor set screws 1410 (e.g., channels 1430, 1432, 1434, 1436, 1440, 1444, and/or 1448). One or more channels of the gas feedthrough 1400 can include vent set screws 1408 (e.g., channels 1420, 1422, 1424, 1426, 1428, 1429, 1442, 1446, 1452, 1464, 1466, 1468, 1470, and/or 1488). One or more channels of the gas feedthrough 1400 can include one or more modified dowel pins 1406, modified to allow for fluid to flow through the channels of gas feedthrough 1400.

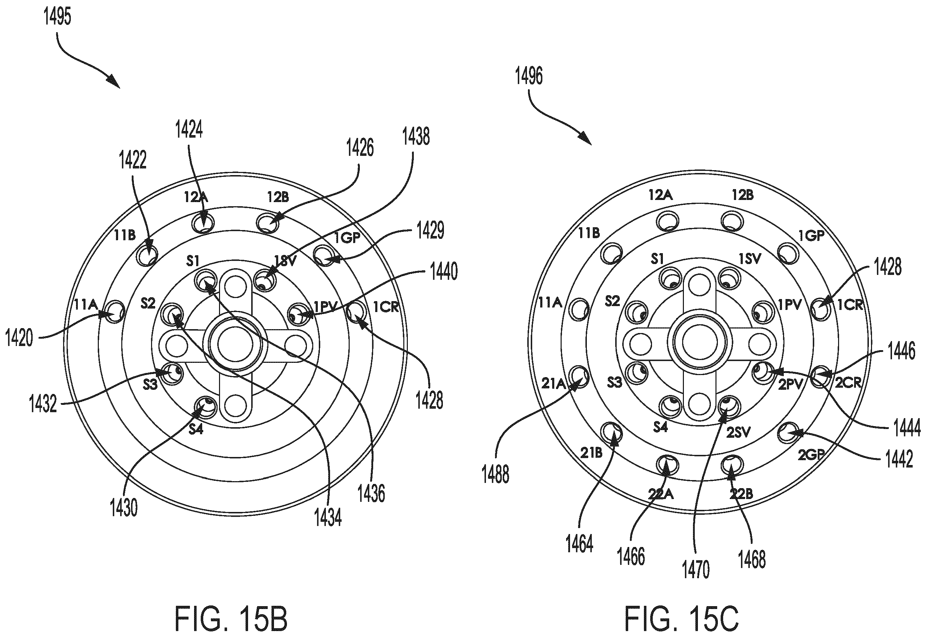

As shown in FIG. 15B, a gas feedthrough 1400 can include a channel arrangement 1495 including a plurality of channels (e.g., twelve channels), for instance for a base manifold with a single analytical module according to one or more embodiments of the present disclosure. As a result, a large number of channels can be provided in a spatially condensed area, reducing the spatial demands of the chromatograph device. For example, channel arrangement 1495 can include four sample channels, a first sample channel 1436, second sample channel 1434, third sample channel 1432, and a fourth sample channel 1430, for receiving a fluid sample (e.g., an injected fluid sample) to be used by the analytical module. Channel arrangement 1495 can also include a carrier inlet 1428 for receiving a carrier fluid for carrying the sample fluid through the gas chromatograph module (e.g., columns of the gas chromatograph). Channel arrangement 1495 can also include a sample vent 1438 for expelling the fluid sample out of the chromatograph device, and a pilot vent 1440 for expelling a pilot fluid out of the chromatograph device. The channel arrangement 1495 can also include four detector vents, first detector vent 1420, second detector vent 1422, third detector vent 1424, and fourth detector vent 1424, for expelling fluid from the detector stages of the chromatograph, and a gauge port vent 1429 for providing an access to the ambient pressure for the pressure sensors of the chromatograph module.

As shown in FIG. 15C, a gas feedthrough can alternatively include a channel arrangement 1496 including a plurality of channels (e.g., twenty channels), for instance for a base manifold with two analytical modules according to one or more embodiments of the present disclosure. Rather than needing to duplicate the number of channels of the channel arrangement 1495 designed for a single analytical module, the channel arrangement 1496 designed for two analytical modules can use the same four sample channels, specifically the first sample channel 1436, second sample channel 1434, third sample channel 1432, and fourth sample channel 1430, for receiving a fluid sample (e.g., an injected fluid sample) to be used by either or both of the analytical modules. Additionally, the channel arrangement 1496 can retain the same positioning of channels as the channel arrangement 1495 and the same vents and inlets, while adding additional vents and inlets to accommodate the second analytical module to provide more flexibility and/or independence between the modules. For example, channel arrangement 1496 can include the carrier inlet 1428 for receiving a carrier fluid for carrying the sample fluid through the first gas chromatograph module (e.g., columns of the gas chromatograph), in addition to a second carrier inlet 1446 for receiving a separate carrier fluid (e.g., a separate injection) through the second gas chromatograph module. Channel arrangement 1496 can also include the sample vent 1438 for expelling the fluid sample from the first chromatograph module out of the chromatograph device and a second sample vent 1470 for expelling the fluid sample from the second chromatograph module out of the chromatograph device. Channel arrangement 1496 can also include the pilot vent 1440 for expelling the pilot fluid from the first chromatograph module out of the chromatograph device and a second pilot vent 1444 for expelling the pilot fluid from the second chromatograph module out of the chromatograph device. The channel arrangement 1496 can also include the four detector vents, specifically first detector vent 1420, second detector vent 1422, third detector vent 1424, and fourth detector vent 1424, for expelling fluid from the detector stages of the first chromatograph module and four further detector vents, specifically the fifth detector vent 1488, sixth detector vent 1464, seventh detector vent 1466, and eighth detector vent 1468 for expelling fluid from the detector stages of the second chromatograph module out of the chromatograph device. The channel arrangement 1496 can also include the gauge port vent 1429 for providing an access to the ambient pressure for the pressure sensors of the first chromatograph module and a second gauge port vent 1442 for expelling fluid from the ionization gauge detector of the second chromatograph module. As a result, each analytical module on the same base manifold can be operated completely independently relying on separate channels, allowing for each analytical module to measure and analyze a fluid sample independently from and in parallel to the other analytical module measuring and analyzing a separate fluid sample. Additionally, and/or alternatively, to allow for full independence, the base manifold can also be flexible enough to use the same sample and/or carrier inlets for the different modules or a combination thereof.

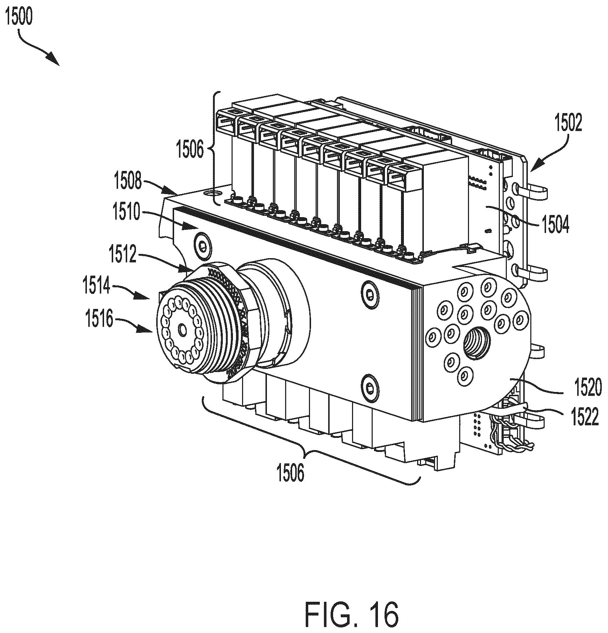

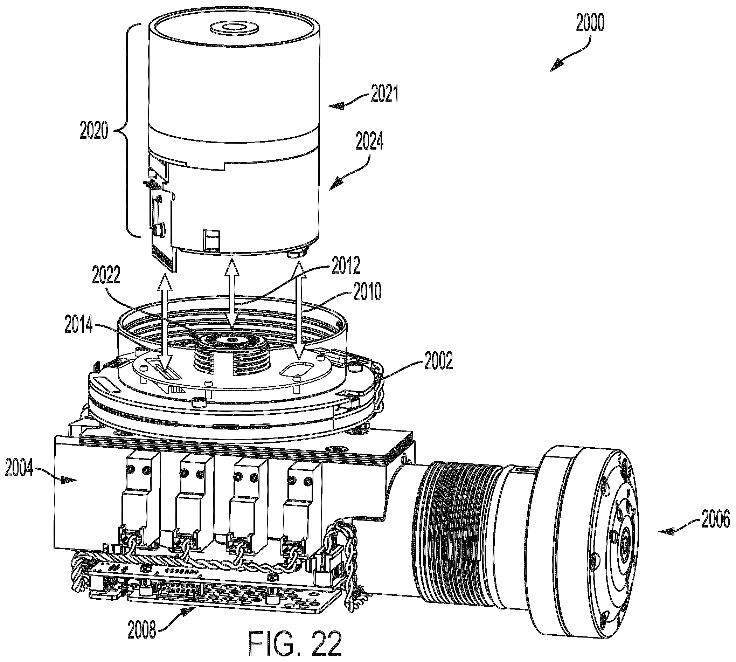

FIG. 16 shows a base manifold 1500 according to one or more embodiments of the present disclosure. Base manifold 1500 can, on one side (e.g., a back side opposite the front side that provides access), include a shield 1502 (e.g., metallic, plastic) for the feedthrough control node 1504. The feedthrough control node 1504 can run one or more processes for the base manifold 1500 (e.g., similar to feedthrough control node 622), such as control one or more valves 1506 of valve block 1508 for one or more channels of the base manifold 1500. For example, some of the valves (e.g., pilot and electronic proportional control (EPC) valves) can be seen to be part of the analytical modules as they control the pressure of the carrier fluid (EPCs) going into one or the other analytical modules, or the operation of the sample valve inside the analytical module (e.g., pilot). Other valves can control the inflow of samples into the base manifold (shutoff), and are controlled by the feedthrough control node 1504. Base manifold 1500 can include a channel distribution plate 1510 (e.g., made via diffusion bonding) for distribution of the channels to the chromatograph module through the manifold post 1516. For example, the manifold 1500 can contain the pressure-regulation valves (to regulate pressure of the carrier gases) and the pilot valves (to control the sample valve in the chromatograph module). Both of those valves can be controlled by the module control node (e.g., module control node 2002) via electrical connections between the module control node and the base manifold 1500 (e.g., as shown in FIG. 22).

Additionally, and/or alternatively, an additive manufactured plate (e.g., where layers are bonded to each other) such as a three-dimensionally printed plate (e.g., where each deposited 'layer' is bonded to the previous layer), a micro-machined plate, or discrete piping can be used as or with channel distribution plate 1510. Additionally, and/or alternatively, a discrete piping arrangement can be used as or with the manifold post 1516 and can be configured to be received through an analytical module such that the manifold post gasket arrangement 1514 interfaces with the channels of the chromatograph module of the analytical module when affixed to the manifold post 1516 using the module retainer 1512. The channels of the base manifold 1500 can begin at the gas feedthrough interface 1524, run through the base manifold 1500 (e.g., through valve block 1508 and channel distribution plate 1510) in a non-linear manner (e.g., not along a single linear axis), and terminate at the manifold post gasket arrangement 1514. Additionally, and/or alternatively, base manifold 1500 can include a cartridge heater 1520 (e.g., 20W cartridge heater) for heating the fluid in the channels of the base manifold 1500, and a real time detector temperature sensor 1522 (e.g., for controlling cartridge heater 1520) controlled by the feedthrough control node 1504.

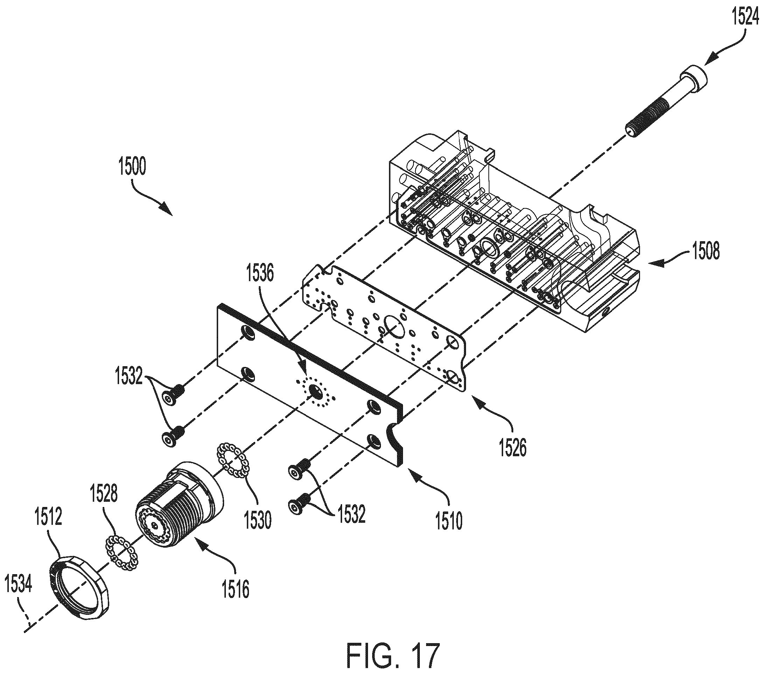

FIG. 17 is an exploded view of base manifold 1500. As shown in FIG. 17, the components of the base manifold 1500 can be centered around and positioned along axis 1534. For example, a manifold bolt 1524 can affix the valve block 1508 to the carrier 1526, channel distribution plate 1510, manifold post seal 1530, and the manifold post 1516 along the axis 1534. Additionally, channel distribution plate 1510 (e.g., diffusion bonded plate, three-dimensionally printed plate, discrete piping plate) can include the plate channel arrangement 1536 corresponding to the channel arrangement of the manifold post gasket arrangement 1514. Base manifold 1500 can also include a manifold post gasket 1528 for each channel of the manifold post 1516 and the module retainer 1512 which sits on a lip of the manifold post 1516. The channel distribution plate 1510 can also be affixed to the carrier 1526 and valve block 1508 using one or more screws 1532.

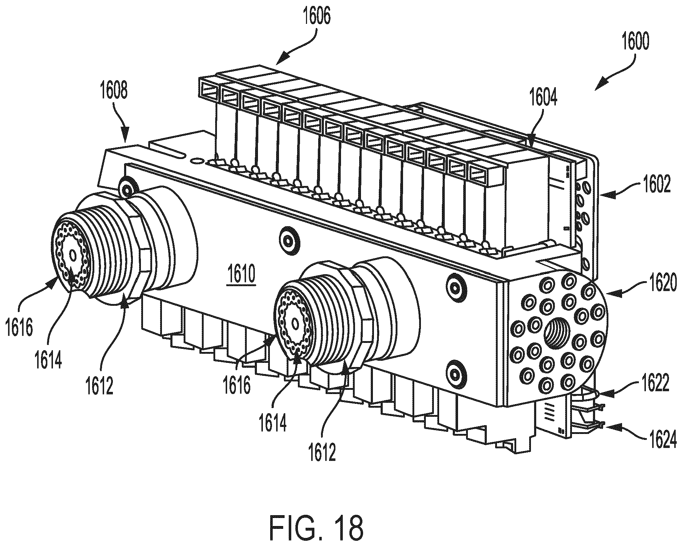

FIG. 18 shows a base manifold 1600 according to one or more embodiments of the present disclosure for use with two analytical modules. Base manifold 1600 can, on one side (e.g., a back side opposite the front side that provides access to the analytical compartment), include a shield 1602 (e.g., metallic, plastic) for the feedthrough control node 1604. The feedthrough control node 1604 can run one or more processes for the base manifold 1600 (e.g., similar to feedthrough control node 924), such as control one or more valves 1606 of valve block 1608 for one or more channels of the base manifold 1600. Base manifold 1600 can include a bonded distribution plate 1610 for distribution of the channels to the chromatograph module through the manifold posts 1616. The manifold posts 1616 can be configured to each be received through an analytical module such that the manifold post gasket arrangements 1614 each interface with the channels of the chromatograph module of each analytical module when affixed to a manifold post 1616 using a module retainer 1612. The channels of the base manifold 1600 can begin at the gas feedthrough interface 1620 (e.g., corresponding to gas feedthrough arrangement 1496), run through the base manifold 1600 (e.g., through valve block 1608 and bonded distribution plate 1610), and terminate at one of the manifold post gasket arrangements 1614. Additionally, and/or alternatively, base manifold 1600 can include a cartridge heater 1622 (e.g., 20W cartridge heater) for heating the fluid in the channels of the base manifold 1600, and a real time detector temperature sensor 1624 (e.g., for controlling cartridge heater 1622) controlled by the feedthrough control node 1604.

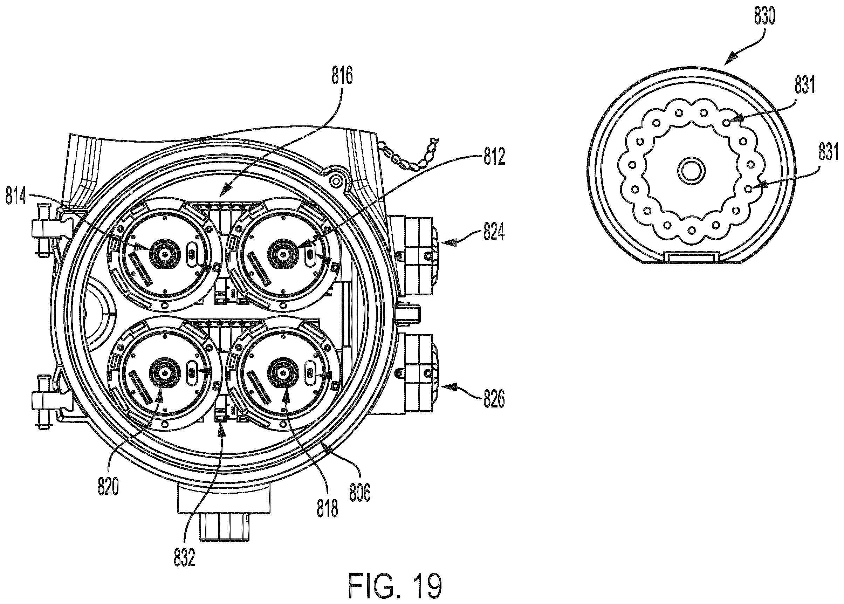

FIG. 19 illustrates how the manifold post gasket arrangement 1514 and/or 1614 can interface with the channels of a chromatograph module of an analytical module, such as the analytical modules of the chromatograph device 800 of FIG. 9A. For example, the analytical compartment 806 can include analytical modules 812 and 814 on a first base manifold 816 and analytical modules 818 and 820 on a second base manifold 822. The first base manifold 816 includes two manifold posts projecting vertically away from the base manifold 816 (e.g., similar to base manifold 1600), and a first manifold post is received by analytical module 812 and a second manifold post is receive by analytical module 814. Base manifold 822 and analytical modules 818 and 820 can be arranged similarly.

Each analytical module (e.g., analytical module 812, 814, 818, and/or 820) can have an identical footprint (e.g., channel arrangement) and/or chromatograph module configuration. For example, each analytical module can include a channel interface arrangement 830 which corresponds to the manifold post gasket arrangement (e.g., arrangement 1614) of the manifold post received by the analytical module. For instance, the analytical module channel interface arrangement 830 can include a plurality of channels 831 (e.g., in a ring formation) corresponding to the channels of the analytical module (e.g., gauge port vents, sample inlets and vents, carrier gas pressure regulated piping, EPCs, detector vents, pilot channels, and/or for different positions of the sample and trains).

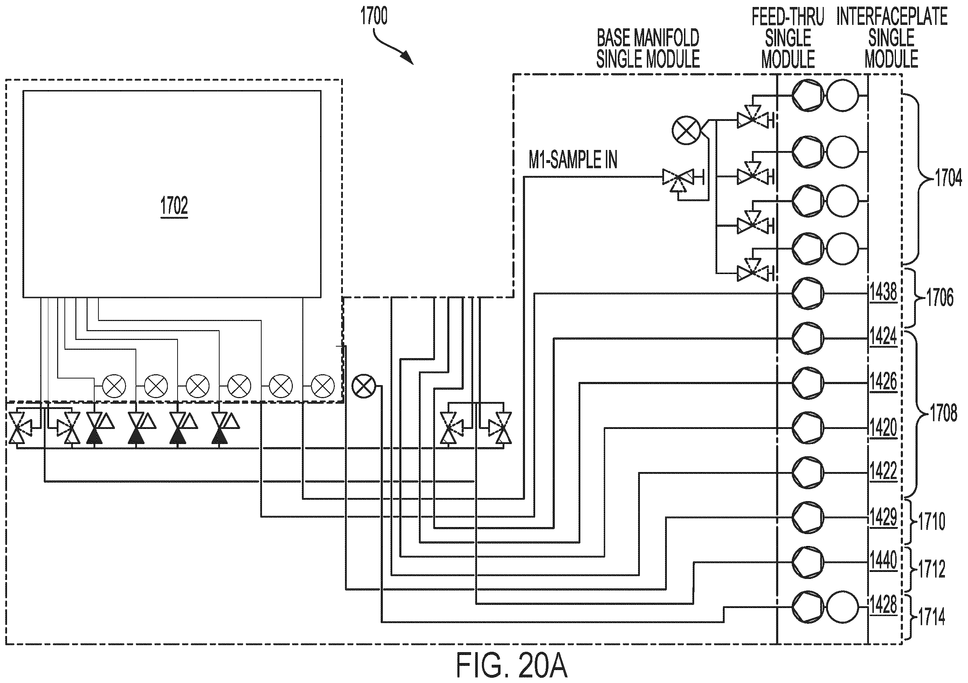

FIG. 20A illustrates a schematic channel configuration 1700 of a base manifold (e.g. base manifold 1500). The channels of channel configuration 1700 can run through a valve block (e.g., valve block 1508) and a bonded plate (e.g., channel distribution plate 1510). The channel configuration 1700 can include a number of channels that communicate fluid with various components of an analytical module 1702. For example, channel configuration 1700 can include a carrier inlet 1714 (e.g., channel 1728), which can include a filter frit 1412, for providing a carrier gas to the analytical module 1702. Channel configuration 1700 can also include one or more sample inlets 1704 (e.g., channel 1730, 1732, 1734, and/or 1736) for providing a sample fluid to the analytical module 1702 to be analyzed by the analytical module 1702. Channel configuration 1700 can also include one or more sample vents 1706 (e.g., channel 1738) and one or more gauge port vents 1710 (e.g., channel 1729) for expelling fluid from the analytical module 1702 out of the chromatograph device. Channel configuration 1700 can also include one or more detector vents 1708 (e.g., channel 1724, 1726, 1720, and/or 1722) for expelling fluid from one or more detectors in the analytical compartment of a chromatograph device. Channel configuration 1700 can also include one or more pilot vents 1712 (e.g., channel 1740) for expelling fluid from a pilot fluid out of the analytical compartment of the chromatograph device. Additionally, each channel of the channel configuration 1700 can include a set screw 1408 and/or 1410.

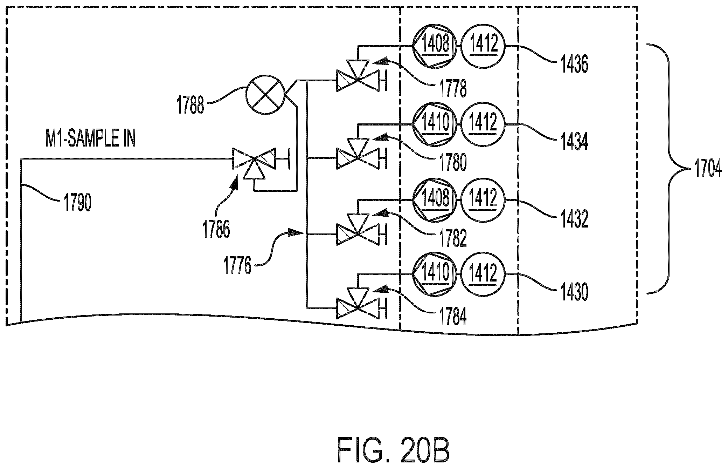

FIG. 20B illustrates a sample inlet 1704 configuration of the channel configuration 1700. Sample inlet 1704 includes four initial channels, a first initial channel 1730, a second initial channel 1732, a third initial channel 1734, and a fourth initial channel 1736. Each initial channel can include a filter frit 1412, a set screw 1408, and/or set screw 1410. Each initial channel can run to an actuated inlet valve (e.g., controlled by a feedthrough control node) for opening or closing a flow of fluid through the initial channel and past the actuated inlet valve. For example, first initial channel 1730 can run to first valve 1784, and first valve 1784 can open or close, thereby opening or closing fluid communication of first initial channel 1730 based on the actuation of the first valve 1784 by the feedthrough control node. Similarly, second initial channel 1732 can run to second valve 1782, third initial channel 1734 can run to third valve 1780, and fourth initial channel 1736 can run to fourth valve 1778, and each of second valve 1782, third valve 1780, and fourth valve 1778 can open or close based on a control signal from the feedthrough control node similarly to first valve 1784. Each of first initial channel 1730, second initial channel 1732, third initial channel 1734, and a fourth initial channel 1736 can flow into a common collection channel 1776 after passing through the respective valve (e.g., valve 1784, 1782, 1780, and/or 1778), which common collection channel 1776 flows into a pressure sensor, same shutoff (PSSS) 1788 configured to measure the pressure of the sample inlet when there is no flow. The common collection channel 1776, after running through PSSS 1788, can run to final actuated inlet valve 1786, which can open or close fluid communication of common collection channel 1776 to the sample delivery channel 1790 based on the actuation of the final valve 1786 by the feedthrough control node. The sample delivery channel 1790 can deliver the fluid sample to the analytical module.

Each of the first valve 1784, second valve 1782, third valve 1780, and fourth valve 1778 can be controlled by the feedthrough control node to sequence the fluid samples received by each of the initial channels 1430, 1432, 1434, and/or 1436. For example, some sample inlets are shared between analytical modules, and the central processing can determine the configuration and the measurements each analytical module is trying to take. The central processing can sequence the intake in the inlets to allow for each manifold to still receive inputs independently (by managing timing and sequencing of inputs) using the feedthrough control node to actuate first valve 1784 to open and second valve 1782 to close based on a timing signal received from a computer-on-module board running a central processing process. Actuating first valve 1784 to open and second valve 1782 to close can allow for a sample received by the initial channel 1730 to pass through the columns of the chromatograph module before a sample received by the initial channel 1732, and based on the timing signal, at a known amount of time before the sample received by the initial channel 1732. As a result, a specific portion of a sample can be provided at defined intervals based on the operation (e.g., actuation) of one or more valves 1778, 1780, 1782, and/or 1784 together or separately.

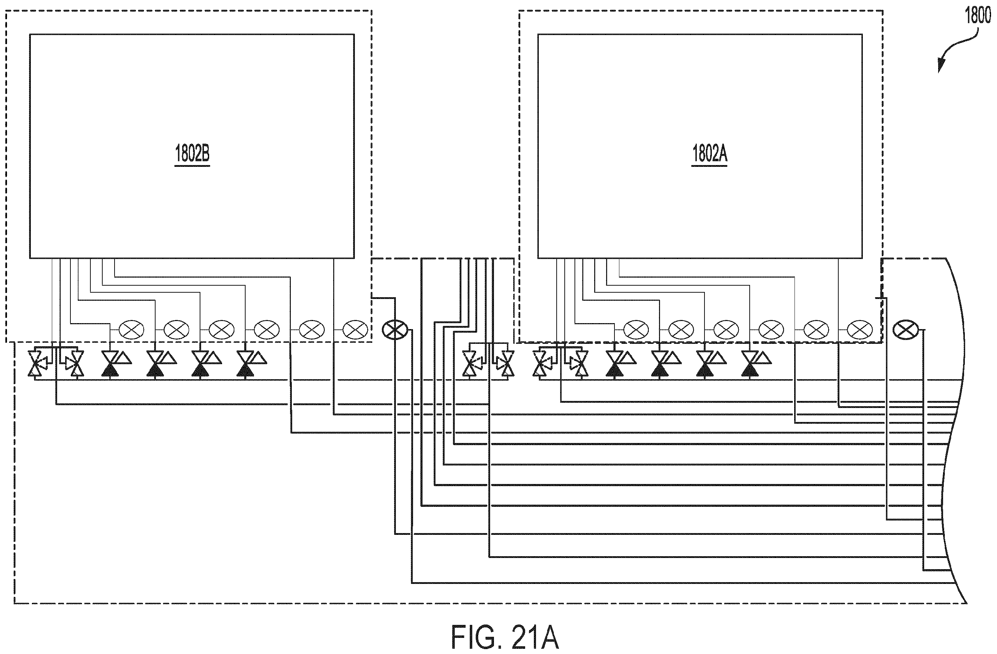

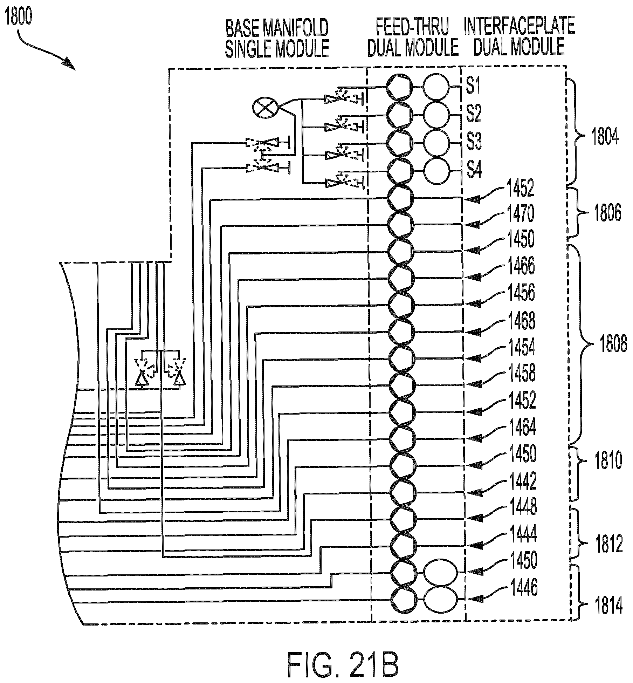

FIGS. 21A and B illustrate an example channel configuration 1800 of a base manifold (e.g., base manifold 1600). The channels of channel configuration 1800 can run through a valve block (e.g., valve block 1608) and a plate (e.g., bonded plate 1610). The channel configuration 1800 can include a number of channels that communicate fluid from inlets (shown in FIG. 21B) to outlets in a manifold post for various components of an analytical module 1802A and/or 1802B (shown in FIG. 21A). For example, channel configuration 1800 can include a carrier inlet 1814, which can include a filter frit 1412 and one or more channels (e.g., channel 1428 and 1446) for providing a carrier gas to the analytical module 1702. For example, channel 1446 can provide a carrier gas to analytical module 1802B and channel 1450 can provide a carrier gas to analytical module 1802A, thereby enabling the chromatograph module of analytical module 1802B to be operated separately from the chromatograph module of analytical module 1802A by providing specific ballasts and/or gas concentrations.

Channel configuration 1800 can also include one or more sample inlets 1804 (e.g., channel 1830, 1832, 1834, and/or 1836) for providing a sample fluid to the analytical module 1802A and/or 1802B to be analyzed by the respective analytical module 1802A and/or 1802B. Channel configuration 1800 can also include one or more sample vents 1806 (e.g., channel 1852 and 1870) and one or more gauge port vents 1810 (e.g., channel 1842 and 1854) for expelling fluid from the analytical module 1802A and/or 1802B out of the chromatograph device. Channel configuration 1800 can also include one or more detector vents 1808 (e.g., channel 1852, 1854, 1856, 1858, 1866, and/or 1868) for expelling fluid from one or more detectors in the analytical compartment of a chromatograph device. Channel configuration 1800 can also include one or more pilot vents 1812 (e.g., channel 1844 and/or 1848) for expelling fluid from a pilot fluid out of the analytical compartment of the chromatograph device. Additionally, each channel of the channel configuration 1800 can include a set screw 1408 and/or 1410.

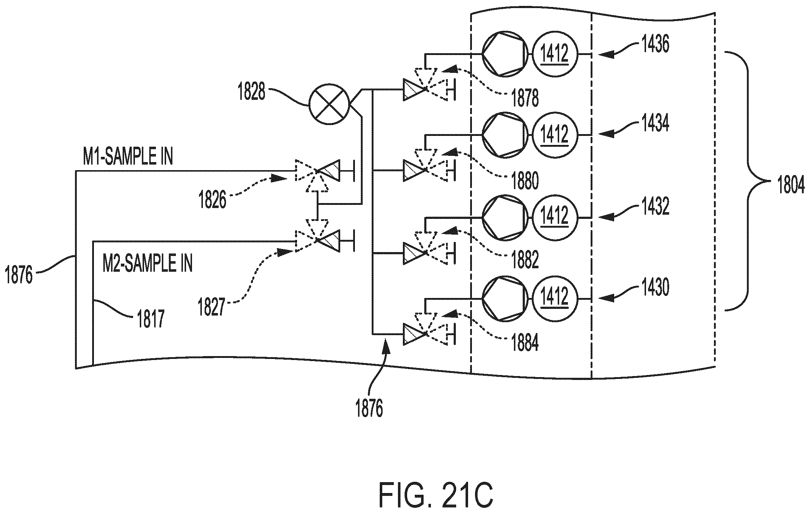

FIG. 21C illustrates a sample inlet configuration 1804 of the channel configuration 1800. Sample inlet 1804 includes four initial channels, a first initial channel 1830, a second initial channel 1832, a third initial channel 1834, and a fourth initial channel 1836. Each initial channel can include a filter frit 1412, a set screw 1408, and/or set screw 1410. Each initial channel can run to an actuated valve (e.g., controlled by a feedthrough control node) for opening or closing a flow of fluid through the initial channel and past the actuated valve. For example, first initial channel 1830 can run to first valve 1884, and first valve 1884 can open or close, thereby opening or closing fluid communication of first initial channel 1830 based on the actuation of the first valve 1884 by the feedthrough control node. Similarly, second initial channel 1832 can run to second valve 1882, third initial channel 1834 can run to third valve 1880, and fourth initial channel 1836 can run to fourth valve 1878, and each of second valve 1882, third valve 1880, and fourth valve 1878 can open or close based on a control signal from the feedthrough control node similarly to first valve 1884. Each of first initial channel 1830, second initial channel 1832, third initial channel 1834, and a fourth initial channel 1836 can flow into a common collection channel 1876 after passing through the respective valve (e.g., valve 1884, 1882, 1880, and/or 1878), which common collection channel 1876 flows into a PSSS 1888. The common collection channel 1876, after running through PSSS 1888, can run to a first final actuated valve 1886 or a second final actuated valve 1887. First final actuated valve 1886 can open or close fluid communication of common collection channel 1876 to a sample delivery channel 1816 for delivering the fluid sample to the analytical module 1802A. Second final actuated valve 1887 can open or close fluid communication of common collection channel 1876 to a sample delivery channel 1817 for delivering the fluid sample to the analytical module 1802B.

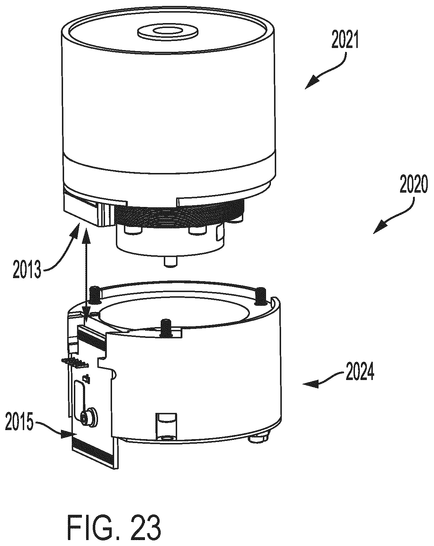

FIGS. 22 and 23 illustrate an analytical module 2000 affixed to a section of a base manifold. For instance, analytical module 2000 can include a sensor plate module control node 2002 and a gas chromatograph module. The chromatograph module 2020 can include a column oven 2021 affixed to heater plate 2024, the heater plate 2024 can be affixed to the sensor plate module control node 2002, and the sensor plate module control node 2002 can be affixed to the base manifold 2004. The base manifold 2004 can be in fluid communication with gas feedthrough 2006 as described above, and controlled by feedthrough control node 2008 (e.g., circuitry) as described above. The sensor plate module control node 2002 can provide one or more supply connections to the heater plate 2024 of the chromatograph module 2020. For example, sensor plate module control node 2002 can provide a sensor connection 2014 for powering one or more sensors of the chromatograph module 2020 and/or communicating with the one or more sensors such as providing operating parameters (e.g. providing set points, timing, configuration, instructions) to the one or more sensors and/or receiving information (e.g., measurements, hardware configuration) from the one or more sensors. The sensor connection 2014 can receive a sensor connector 2015 (e.g., a PCB) that established a communication between a sensor connection 2013 of the column oven 2021 and the sensor connection 2014 of the sensor plate module control node 2002. For instance, previous chromatograph devices typically used a cable connection, as opposed to a PCB, which the inventors of the present application realized can be prone to misconnection and demand time to exchange modules, whereas one or more embodiments of the present application including a PCB sensor connector can alleviate these situations via providing a dedicated PCB. Sensor plate module control node 2002 can provide a heater connection 2010 for powering the heater plate 2024 of the chromatograph module 2020 and/or communicating with the heater plate 2024. The chromatograph module 2020 can receive fluid (e.g., sample fluid, carrier fluid) via the manifold post 2022 of the base manifold 2004.

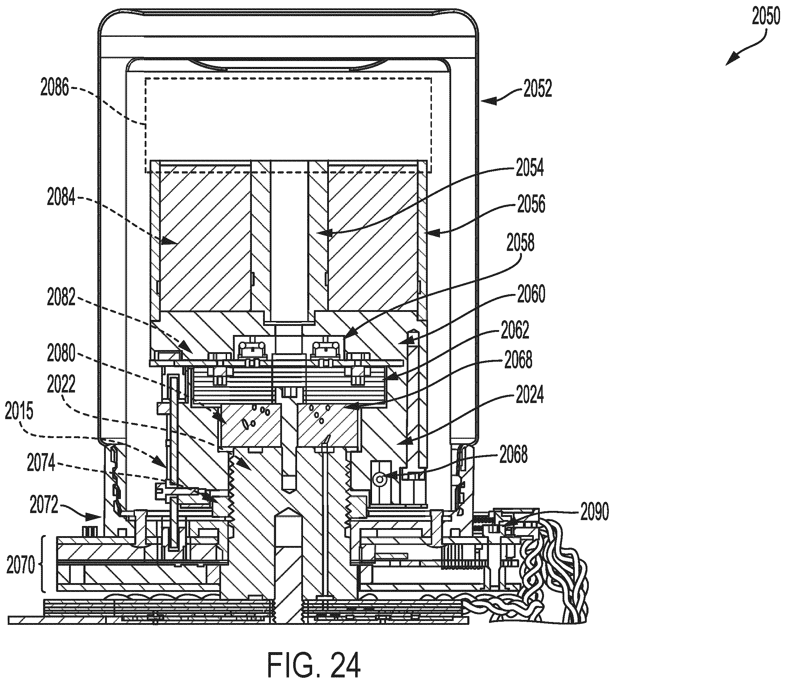

FIG. 24 provides a cross sectional view of the hardware of an analytical module (e.g., analytical module 2000) according to one or more embodiments of the present disclosure. As can be seen in FIG. 24, analytical module 2000 can include a vacuum insulated dewar 2052 affixed to a dewar base 2072. The analytical module 2000 provides for the fluid sample to flow through the heater and sensors at a controlled temperature (e.g., from 5 to 100 degrees Celsius), and performs one or more measurements of the fluid sample before, during, and/or after the fluid sample flows into, through, and out of the columns 2084. The dewar base 2072 can be coupled (e.g., affixed, connected) to a module control node 2070 (e.g., circuitry) using one or more retaining nuts 2074 (e.g., fasteners), and dewar base 2072 can receive the manifold post 2022 through the center of the dewar base 2072 for providing fluid to the columns 2084 of the analytical module 2000. Module control node 2070 can be affixed to the base manifold using one or more bolts 2090 (e.g., fastener). Dewar 2052 (e.g., the insulation layer of the chromatograph module) can include within its volume (e.g., surround) a column spool (e.g., shown in cross section as inner column spool 2054 and outer column spool 2056) which surrounds the columns 2084 of the chromatograph module of the analytical module 2000, and reserved space 2086 (e.g., for columns and sample loops), providing approximately fifty three percent more space for columns and sample loops. Dewar 2052 can include (e.g., surround) the heater plate 2024. Heater plate 2024 can include a valve cap 2058 in a column plate 2060 atop a sensor PCB 2082 and sensor plate 2062. Sensor plate 2062 can include one or more sensors of the chromatograph module (e.g., temperature, pressure sensors, and/or thermal conductivity detectors). Heater plate 2024 can also include a pilot plate 2080 and valve diaphragms 2064 below sensor plate 2062 and one or more further temperature devices 2068 (e.g., RTD temperature sensor controller, a thermocouple, and/or a cartridge heater), in addition to sensor connector 2015 as shown in FIG. 23.

FIG. 25 illustrates an exemplary PCB 2200 for a module control node (e.g., for the module control node 2070). For instance, the module control node PCB 2200 can be circular with a hole through the middle for receiving the manifold post 2022. The PCB 2200 can provide sensor connections 2202 (e.g., for sensor connection 2014) as described above via a number of standardized or non-standard ports, with PCB 2200 shown to include a header connector for sensor connections 2202. PCB 2200 can also include heater connections 2204 (e.g., heater connection 2010) for powering and/or communication with a heater of a heater plate (e.g., heater plate 2024) as described above.

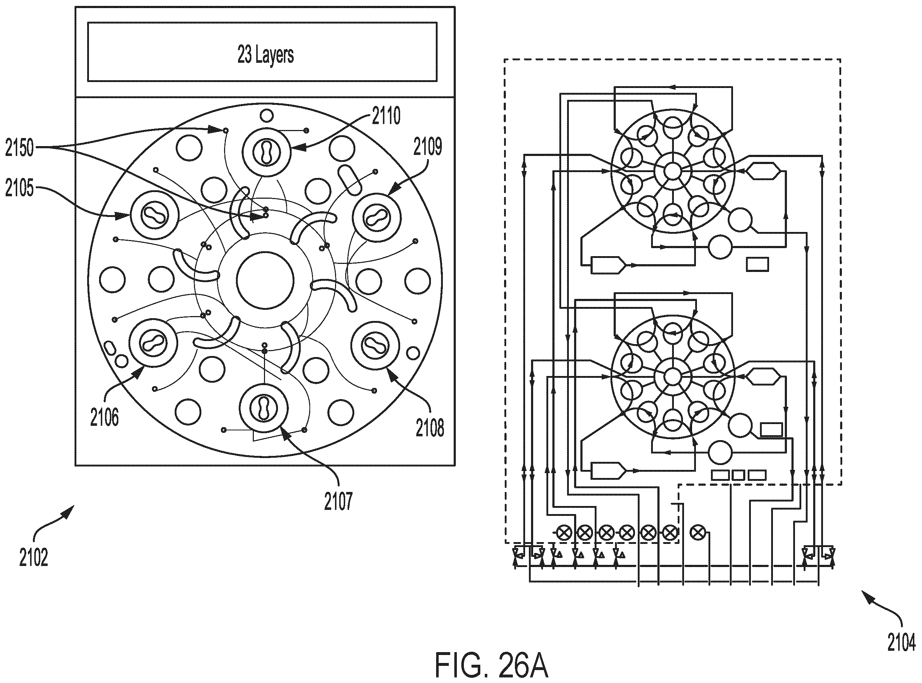

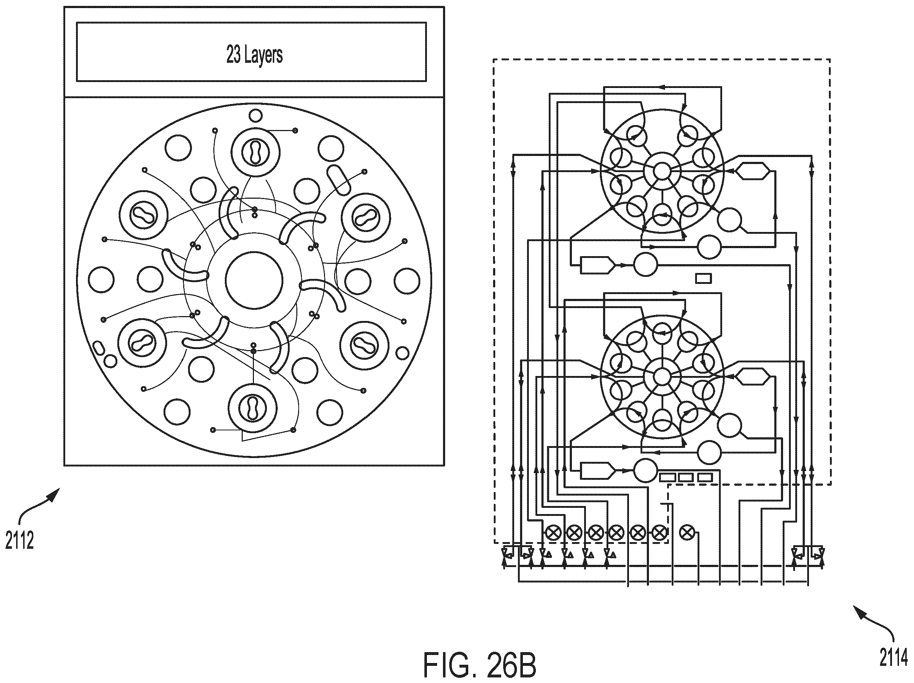

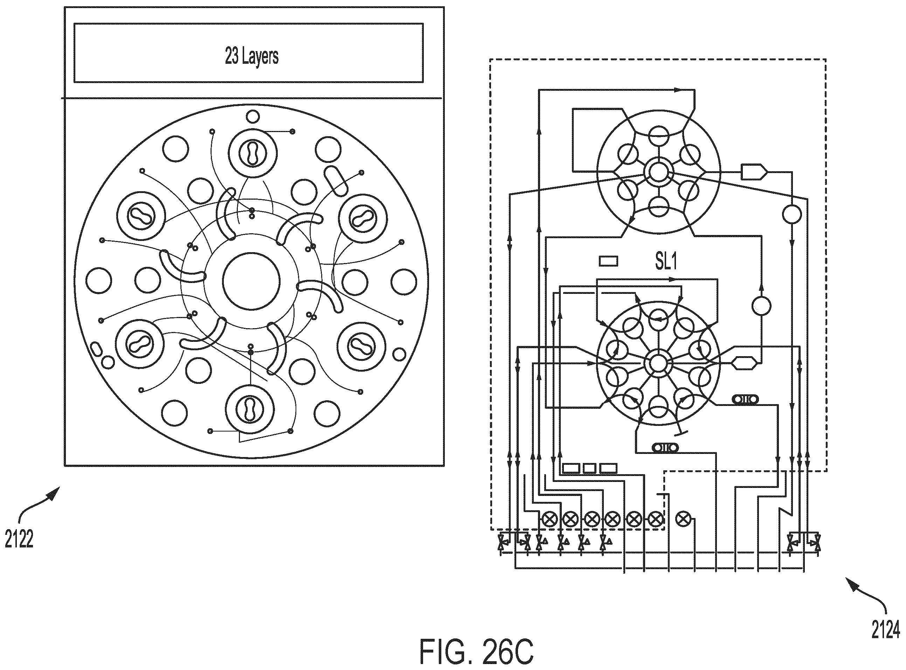

FIGS. 26A, 26B, and 26C show different possible channel configurations for a sensor plate of an analytical module (e.g., sensor plate 2062) located between the module control node PCB and chromatograph module. FIG. 26A shows a reverse column step sensor plate 2102 with a channel configuration 2104, FIG. 26B shows a back flush to measure sensor plate 2112 with a channel configuration 2114, and FIG. 26C shows a heart cut sensor plate 2122 with a channel configuration 2124.

Each of sensor plates 2102, 2112, and 2122 (e.g., bonded sensor plate) can include, for example, twenty three layers, with each layer including an arrangement of cutouts (e.g., holes) that when placed in the appropriately ordered combination with the remaining twenty two layers, form the channel configuration. For example, a three-dimensional channel configuration can be designed for a given volume (e.g., within the volume defined by the pilot plate 2080 and/or sensor plate 2062). That volume that can be divided into 23 separate semi-two-dimensional planes (e.g., non-overlapping layers with a small height compared to its width/diameter). For instance, pilot plate 2080 and/or sensor plate 2062 can be divided into twenty three horizontal layers from bottom to top. A plate (e.g., metallic plate) can then be made for each of the layers corresponding to the outer shape and boundaries of the pilot plate, and including the shape and arrangements of any portion of any channels (e.g., channels running from manifold post channel arrangement to channel ports 2150) that run through that layer (e.g., a straight circular cutout if the channel runs through the layer vertically, or a wider cutout if the channel runs diagonally/horizontally across that layer). Each plate can then be diffusion bonded to each other and, when the plates are united, form the channel configuration for the sensor plate. Additionally, and/or alternatively, the plates can be formed through micromachining (e.g., building the cutouts as microstructures via deposition and/or etching over a substrate) and other additive manufacturing processes (e.g., three-dimensional printing) following a similar process as described above for diffusion bonding. Therefore, the layering of the sensor plates 2102, 2112, and 2122 allows for plumbing to be routed through the layers of the plate similar to a jigsaw plate (e.g., between the layers rather than only linearly or through a single layer), allowing for three dimensional channel plumbing configurations. For instance, the channels can be etched into the layers of the sensor plates 2102, 2112, and/or 2122 (e.g., bonded plates) in addition and/or alternatively to cross drilled channels.

Additionally, and/or alternatively, the piping (e.g., forming of the channel configuration) can be done between two interfaces. For example, the piping can be designed and when the plate is produced, the channels become holes in the semi-two-dimensional cross section of the three-dimensional volume of the channel configuration. For instance, cutting the arbitrary three-dimensional volume in slices, each of these slices becomes a plates having some openings, and putting all the slices together creates the channels out of the collections of holes. In one or more embodiments, this provides greater control over the shape, orientation, and complexity of channel configuration that allows for space to be condensed. For example, in one or more embodiments a channel can be brought between and in and out of layers. Additionally, and/or alternatively, the layers can be laminates that do not necessarily need to be sealed together to be bonded to each other. In one or more embodiments, this approach is used for both the analytical module and the manifold plate.

The face of each sensor plate 2102, 2112, and 2122 can have an identical interface with the chromatograph module, with the layers of the of the sensor plate varying underneath and providing the different respective channel configurations 2104, 2114, and 2124 (e.g., for use with a base manifold channel configuration 1700 and/or 1800. For example, each of sensor plate 2102, 2112, and 2122 can include similarly located bolts 2105, 2106, 2107, 2108, 2109, and 2110 and channel ports 2150 disposed around sensor plate 2102, 2112, and 2122. As a result, one sensor plate can be easily exchanged for another sensor plate and provide enhanced modularity for a chromatograph device. Additionally, the use of a diffusion bonded plate for channel configuration 2104, 2114, and/or 2124 can allow for increased compactness and part count reduction over classical channel plumbing configurations.

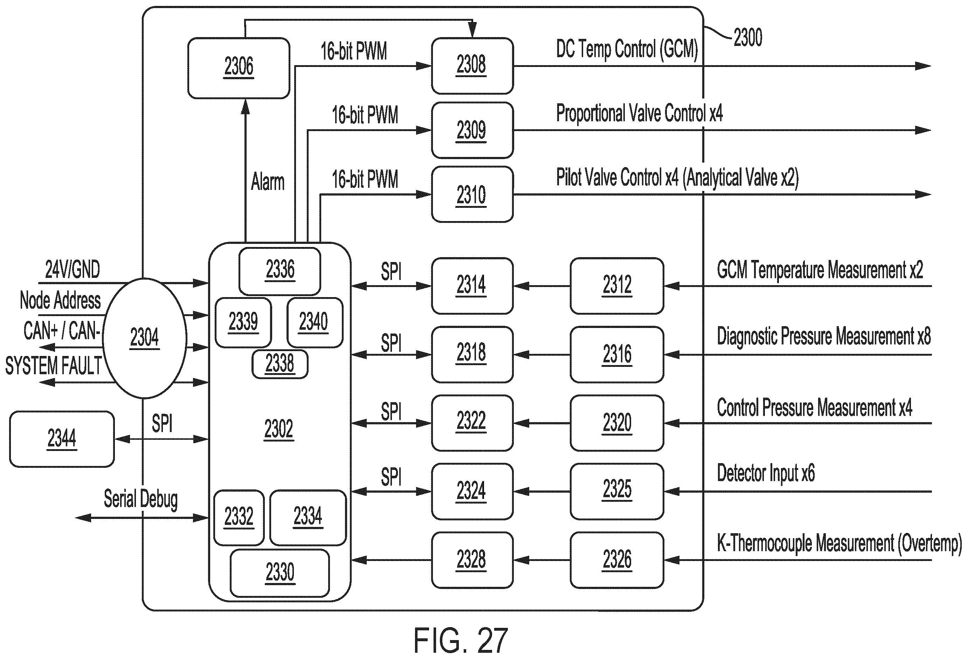

FIG. 27 provides a schematic representation of a module control board 2300 (e.g., PCB 2200) for an analytical module (e.g., analytical module 2000). The module control board 2300 can include a distributed operation core 2302 running a distributed operation process, where there distributed operation core 2302 is the part of the bottom work electronics that is common between a feedthrough control node and a manifold control node. Having the same hardware can allow the same software (e.g., distributed operation process) to run on each of the feedthrough control node and the manifold control node. The distributed operation core 2302 includes a microcontroller 2336 (e.g. RENEAS Rx65) and a complex programmable logic device (CPLD) 2330 (e.g., INTEL Max V). Distributed operation core 2302 can also include a core power controller 2340, CAN physical 2339, debug controller 2332, real time operating system 2338, and/or one or more diagnostic LEDs 2334 to provide visual feedback to a user. The distributed operation core 2302 can run the distributed operation software as described above for managing communications with one or more of further components (e.g., chromatograph sensors, feedthrough control nodes, and central processing components). Distributed operation core 2302 can communicate with a node interface 2304 providing one or more communication services such as node address information, CAN +/-, system fault communications and/or diagnostics, and/or power supply receipt. Distributed operation core 2302 can also communicate with one or more further controllers (e.g., via 16 bit communication) such as the heater drive 2308 which provides DC temperature control of the chromatograph module, one or more pressure controllers 2309 for proportional valve control, and/or one or more pilot valve drives 2410 for controlling one or more pilot valves (e.g., of one or more analytical valves). Distributed operation core 2302 can also communicate with an alarm/lockout controller 2306 for temperature and voltage alarms and lockout functionality.

Distributed operation core 2302 can also communicate with (e.g., receive data from) one or more sensors and/or detectors via a dedicated analog functional equivalent (FE) and a dedicated analog to digital converter (ADC). For example, distributed operation core 2302 can receive temperature measurement data from one or more chromatograph temperature sensors via an analog FE 2312 and ADC 2314 (e.g., 24 bit), diagnostic pressure measurement data from one or more pressure sensors via an analog FE 2316 and ADC 2318 (e.g., 16 bit), control pressure measurement data from one or more pressure sensors via an analog FE 2320 and ADC 2322 (e.g., 24 bit), detector input data from one or more detectors via an analog FE 2325 and ADC 2324 (e.g., 24 bit), and/or thermocouple measurement data from one or more thermocouple sensors via cold junction compensation 2326 and forward voltage front end 2328.

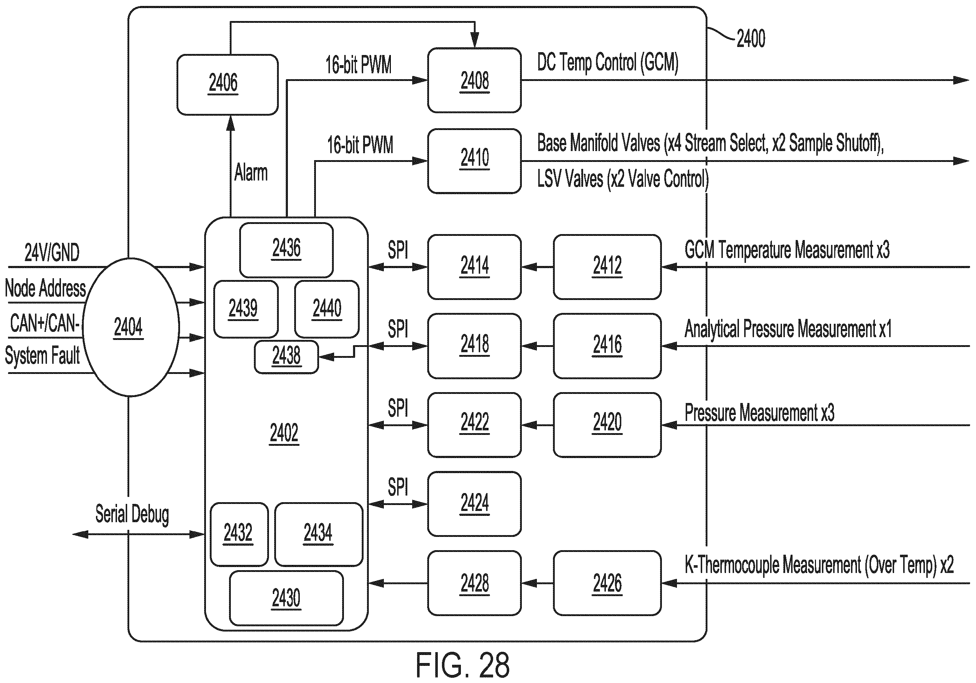

FIG. 28 provides a schematic representation of a feedthrough control board 2400 (e.g., FCN 1504) for a base manifold (e.g., base manifold 1500). The feedthrough control board 2400 is responsible for controlling the fluid inflow and outflow and its temperature. The feedthrough control board can include a distributed operation core 2402 with a microcontroller 2436 (e.g. RENEAS Rx65) and a field programmable gate array (FPGA) 2430 (e.g., INTEL Max 10). Distributed operation core 2402 can also include a core power controller 2440, CAN physical 2439, debug controller 2432, real time operating system 2438, and/or one or more diagnostic LEDs 2434 to provide visual feedback to a user. The distributed operation core 2302 can run the distributed operation software as described above for managing communications with one or more of further components (e.g., module control board, actuated valves of base manifold, and central processing components). Distributed operation core 2302 can communicate with a node interface 2404 providing one or more communication services such as node address information, CAN +/-, system fault communications and/or diagnostics, and/or power supply receipt. Distributed operation core 2402 can also communicate with one or more further controllers (e.g., via 16 bit communication) such as the heater drive 2408 which provides DC temperature control of the chromatograph module and/or one or more pilot valve drives 2410 for controlling one or more pilot valves (e.g., base manifold valves for sample stream selection (e.g., actuated valves 1878, 1880, 1882, and/or 1884) sample shutoff, and/or liquid sample valves). Distributed operation core 2402 can also communicate with an alarm/lockout controller 2406 for temperature and voltage alarms and lockout functionality.

Distributed operation core 2402 can also communicate with (e.g., receive data from) one or more sensors and/or detectors via a dedicated analog functional equivalent (FE) and a dedicated analog to digital converter (ADC). For example, distributed operation core 2402 can receive temperature measurement data from one or more chromatograph temperature sensors via an analog FE 2412 and ADC 2414 (e.g., 24 bit), analytical module pressure measurement data from one or more pressure sensors via an analog FE 2316 and ADC 2318 (e.g., 16 bit), manifold pressure measurement data from one or more pressure sensors via an analog FE 2420 and ADC 2422 (e.g., 24 bit), and/or thermocouple measurement data from one or more thermocouple sensors via cold junction compensation 2426 and forward voltage front end 2428. Distributed operation core 2402 can also communicate with an electrically erasable programmable read-only memory (EEPROM) (e.g., for retaining memory in the event of power failure).

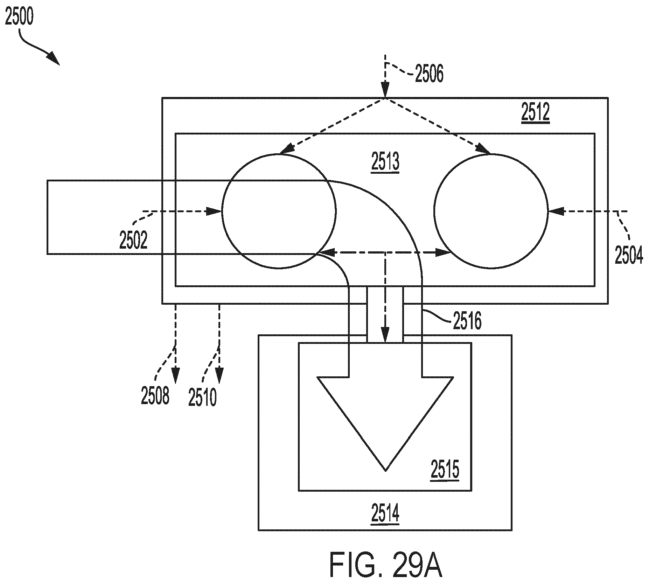

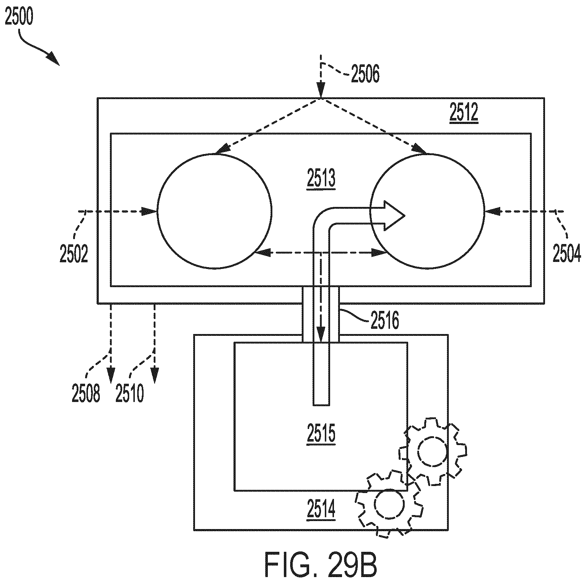

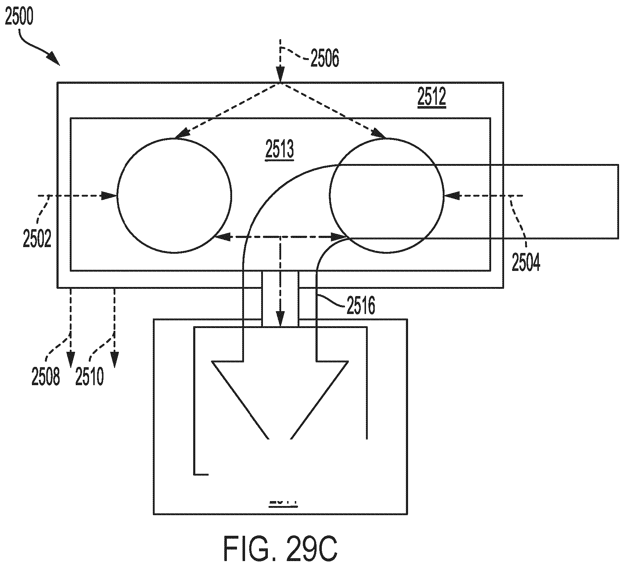

FIGS. 29A, 29B and 29C provide a schematic representation for a method of gas chromatography using a chromatograph device 2500 according to one or more embodiments of the present disclosure. For example, chromatograph device 2500 can include an analytical compartment 2512, electrical feedthrough 2516, and electrical compartment 2514. The analytical compartment 2512 can include a base manifold 2513 running a distributed operation instance and two analytical modules disposed on the base manifold 2513 running a distributed operation instance, analytical module 2517 and analytical module 2518. Electrical compartment 2515 can include a central computing unit 2515 running a central processing software as described above. The chromatograph device 2500 can also include two separate sample fluid input channels, sample channel 2502 and sample channel 2504, and two vents, a purge vent 2508 and sample vent 2510. The analytical modules 2317 and 2318 can be in electrical communication with each other, and both can be in electrical communication with central computing unit 2515.

Analytical module 2518 can receive a fluid sample from sample input channel 2502 and analyze the sample according to a chromatograph process. The analytical module can provide the measurements from the analyzed sample to the central computing unit 2515 using the distributed operation software. The central computing unit 2515 can analyze the measurements and determine one or more attributes of the sample fluid using the central processing software. Based on the determined one or more attributes, the central computing unit can then provide one or more configurations and/or operating parameters (e.g., set points, valve timings) to the analytical module 2517, using the central processing software, to be processed and implemented by the distributed operation instances. The analytical module 2517 can receive a second fluid sample from sample input channel 2504 and analyze the sample according to a chromatograph process. The analytical module can provide the measurements from the analyzed sample to the central computing unit 2515 using the distributed operation software. The central computing unit 2515 can analyze the measurements and determine one or more attributes of the sample fluid using the central processing software.

While subject matter of the present disclosure has been illustrated and described in detail in the drawings and foregoing description, such illustration and description are to be considered illustrative or exemplary and not restrictive. Any statement made herein characterizing the invention is also to be considered illustrative or exemplary and not restrictive as the invention is defined by the claims. It will be understood that changes and modifications may be made, by those of ordinary skill in the art, within the scope of the following claims, which may include any combination of features from different embodiments described above.

The terms used in the claims should be construed to have the broadest reasonable interpretation consistent with the foregoing description. For example, the use of the article "a" or "the" in introducing an element should not be interpreted as being exclusive of a plurality of elements. Likewise, the recitation of "or" should be interpreted as being inclusive, such that the recitation of "A or B" is not exclusive of "A and B," unless it is clear from the context or the foregoing description that only one of A and B is intended. Further, the recitation of "at least one of A, B and C" should be interpreted as one or more of a group of elements consisting of A, B and C, and should not be interpreted as requiring at least one of each of the listed elements A, B and C, regardless of whether A, B and C are related as categories or otherwise. Moreover, the recitation of "A, B and/or C" or "at least one of A, B or C" should be interpreted as including any singular entity from the listed elements, e.g., A, any subset from the listed elements, e.g., A and B, or the entire list of elements A, B and C.

## Claims

1. A device, comprising:
a first circuitry comprising a memory and one or more processors configured to:
provide, to a second circuitry of a manifold plate, a control signal for an inlet valve of the manifold plate;
receive, from a third circuitry of a first analytical module, an attribute of a first fluid sample; and
determine, based on the measured attribute of the first fluid sample, a physical component of the first fluid sample,
the manifold plate comprising the second circuitry and an inlet, the inlet comprising the inlet valve and an inlet channel, the second circuitry comprising a second memory and one or more second processors configured to:
receive, from the first circuitry, the control signal; and
control the inlet valve of the inlet, based on the control signal, to direct the first fluid sample from the inlet valve through the inlet channel to the first analytical module, and
the first analytical module affixed to the manifold plate and comprising a first gas chromatograph oven and the third circuitry, the third circuitry comprising a third memory and one or more third processors configured to communicate with one or more sensors, the third circuitry configured to:
measure, using the one or more sensors, the attribute of the first fluid sample in the first gas chromatograph oven; and
provide, to the first circuitry, the attribute of the first fluid sample.

2. The device of claim 1, wherein the first circuitry is further configured to:
provide, to the third circuitry of the first analytical module, a first configuration for the first analytical module, and
wherein the third circuitry is further configured to:
receive, from the first circuitry, the first configuration; and
adjust a first operating parameter of the first gas chromatograph oven based on the first configuration.

3. The device of any one of the claims 1 to 2, wherein the first circuitry is further configured to:
obtain, from the third circuitry, an identification of a structural configuration of the first analytical module; and
provide, to the third circuitry, the first configuration based on the obtained first identification.

4. The device of any one of the claims 1 to 3, wherein the first operating parameter comprises a set point for the temperature or pressure of the first gas chromatograph oven, and wherein providing, to the third circuitry of the first analytical module, the first configuration further comprises providing the set point to the third circuitry.

5. The device of any one of the claims 1 to 4, further comprising a second analytical module comprising:
a second gas chromatograph oven comprising a same channel interface as a channel interface of the first gas chromatograph oven and a different channel configuration from a channel configuration of the first gas chromatograph oven; and
a second instance of the third circuitry comprising one or more second sensors, the second instance of the third circuitry configured to:
receive, from the first circuitry, a second configuration;
adjust a second operating parameter of the second gas chromatograph oven based on the second configuration;
measure, using the one or more second sensors independently from and in parallel to measuring the attribute of the first fluid sample in the first gas chromatograph, an attribute of a second fluid sample in the second gas chromatograph; and
provide, to the first circuitry, the attribute of the second fluid sample, and
wherein the first circuitry is further configured to:
provide, to the second instance of the third circuitry, the second configuration based on the determined physical component of the first fluid sample;
receive, from the second instance of the third circuitry, the attribute of the second fluid sample; and
determine, based on the attribute of the second fluid sample, a physical component of the second fluid sample.

6. The device of any one of the claims 1 to 5, wherein the first circuitry is further configured to:
provide, to the third circuitry of the first analytical module, a first configuration for the first analytical module;
obtain, from the second instance of the third circuitry, a second identification of a structural configuration of the second analytical module; and
provide, to the second instance of the third circuitry, the second configuration further based on the first configuration and the obtained second identification.

7. The device of any one of the claims 1 to 6, wherein the first circuitry further comprises a first printed circuit board (PCB), wherein the second circuitry comprises a second PCB, wherein the third circuitry comprises a third PCB, and wherein the first PCB, the second PCB, and the third PCB are each separate PCBs.

8. The device of any one of the claims 1 to 7, wherein the device further comprises an explosion proof housing surrounding the first circuitry, the manifold plate, and the first analytical module.

9. The device of any one of the claims 1 to 8, wherein the explosion proof housing comprises a first portion housing the first circuitry, a second portion housing the manifold plate and the first analytical module, and a third portion providing a seal between the first portion the second portion, and wherein the third portion surrounds a portion of an electronic communication infrastructure between the first circuitry and the second circuitry and the third circuitry.

10. The device of any one of the claims 1 to 9, wherein the manifold plate further comprises a channel interface comprising a portion of a first inlet channel and a portion of a first vent channel, and wherein the first gas chromatograph oven is removably affixed to the channel interface of the manifold plate via a fastener.

11. The device of any one of the claims 1 to 10, further comprising a second manifold plate and a second analytical module, the second manifold plate comprising a second instance of the second circuitry and a second inlet, the second inlet comprising a second inlet valve and a second inlet channel, the second circuitry comprising a fourth memory and one or more fourth processors configured to:
receive, from the first circuitry, a second control signal; and
control the second inlet valve of the inlet, based on the second control signal, to direct a second fluid sample from the second inlet valve through the second inlet channel to the second analytical module, and
the second analytical module affixed to the second manifold plate and comprising a second gas chromatograph oven and a second instance of the third circuitry, the second instance of the third circuitry comprising a fifth memory and one or more fifth processors configured to communicate with one or more second sensors, the fifth circuitry configured to:
measure, using the one or more second sensors, the attribute of the second fluid sample in the second gas chromatograph; and
provide, to the first circuitry, the attribute of the second fluid sample.

12. A system for performing gas chromatography, comprising a device of any of the preceding claims.

13. The system of claim 12, further comprising a housing surrounding a portion of an electronic communication infrastructure between the first circuitry and the second circuitry, the housing configured to provide a fluid seal between the first circuitry and the second circuitry or the third circuitry.

14. A method for operating a chromatograph device, comprising:
providing, by a first circuity and to a manifold plate comprising a second circuity and an inlet comprising an inlet valve and an inlet channel, a control signal for the inlet valve;
adjusting the inlet valve, by the second circuitry and based on the control signal, to direct a first fluid sample from the inlet valve through the inlet channel to the first analytical module;
measuring, by an analytical module comprising a first gas chromatograph, a third circuitry, and one or more sensors and using the one or more sensors, an attribute of the first fluid sample in the first gas chromatograph;
receiving, by the first circuitry and from the third circuitry, the measured attribute of the first fluid sample; and
determining, by the first circuitry and based on the received measured attribute of the first fluid sample, a physical component of the first fluid sample.
